(19) **Europäisches Patentamt / European Patent Office / Office européen des brevets**

(11) **EP 2 798 322 B1**

(12) # EUROPEAN PATENT SPECIFICATION

(45) Date of publication and mention of the grant of the patent:
**15.07.2020 Bulletin 2020/29**

(21) Application number: **12861672.9**

(22) Date of filing: **06.04.2012**

(51) Int Cl.:
*G01J 4/00* (2006.01)      *G01N 21/3581* (2014.01)
*G01N 21/21* (2006.01)

(86) International application number:
**PCT/US2012/000193**

(87) International publication number:
**WO 2013/101252 (04.07.2013 Gazette 2013/27)**

(54) **TERAHERTZ ELLIPSOMETER SYSTEM, AND METHOD OF USE**

TERAHERTZ-ELLIPSOMETERSYSTEM UND VERWENDUNGSVERFAHREN DAFÜR

ELLIPSOMÈTRE TÉRAHERTZ ET PROCÉDÉ D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2011 US 201161631383 P**

(43) Date of publication of application:
**05.11.2014 Bulletin 2014/45**

(73) Proprietor: **J.A. Woollam Co., Inc.**
**Lincoln, NE 68508 (US)**

(72) Inventor: **HERZINGER, Craig, M.**
**Lincoln, NE 68506 (US)**

(74) Representative: **Beck Greener LLP**
**Fulwood House**
**12 Fulwood Place**
**London WC1V 6HR (GB)**

(56) References cited:
**WO-A2-2008/013909      US-A- 4 332 476**
**US-A1- 2007 188 755      US-A1- 2007 268 490**
**US-A1- 2010 220 313      US-A1- 2010 220 313**
**US-A1- 2010 271 621      US-B1- 7 333 198**
**US-B1- 7 889 339**

**Description**

TECHNICAL FIELD

The present invention relates to ellipsometer and polarimeter systems, and more particularly to an ellipsometer or polarimeter or the like system which operates in a THZ frequency range and basically comprises a backward wave oscillator; a frequency multiplier; a first rotatable polarizer comprising a wire grid; a first rotating element (RE1), (eg. a wire grid polarizer (RWGP)); a stage for supporting a sample; a second rotating element (RE2), (eg. a retarder comprising first, second, third and fourth elements (RRET)), a second rotatable polarizer comprising a wire grid; and a Golay cell detector.

BACKGROUND

The practice of ellipsometry is well established as a non-destructive approach to determining characteristics of sample systems, and can be practiced in real time. The topic is well described in a number of publications, one such publication being a review paper by Collins, titled "Automatic Rotating Element Ellipsometers: Calibration, Operation and Real-Time Applications", Rev. Sci. Instrum., 61(8) (1990).

Before proceeding, as it is relevant to the present invention, it is noted that ellipsometer systems generally comprise means for setting a linear or elliptical polarization state, (typically substantially linear). Further, in general, the modern practice of ellipsometry typically involves causing a spectroscopic beam of electromagnetic radiation, in a known state of polarization, to interact with a sample system at at least one angle of incidence with respect to a normal to a surface thereof, in a plane of incidence. (Note, a plane of incidence contains both a normal to a surface of an investigated sample system and the locus of said beam of electromagnetic radiation). Changes in the polarization state of said beam of electromagnetic radiation which occur as a result of said interaction with said sample system are indicative of the structure and composition of said sample system. The practice of ellipsometry further involves proposing a mathematical model of the ellipsometer system and the sample system investigated by use thereof, and then experimental data is obtained by application of the ellipsometer system. This is typically followed by application of a square error reducing mathematical regression to the end that parameters in the mathematical model which characterize the sample system are evaluated, such that the obtained experimental data, and values calculated by use of the mathematical model, are essentially the same.

A typical goal in ellipsometry is to obtain, for each wavelength in, and angle of incidence of said beam of electromagnetic radiation caused to interact with a sample system, sample system characterizing PSI and DELTA values, (where PSI is related to a change in a ratio of magnitudes of orthogonal components $r_p/r_s$ in said beam of electromagnetic radiation, and wherein DELTA is related to a phase shift entered between said orthogonal components $r_p$ and $r_s$), caused by interaction with said sample system. The governing equation is:

$$\rho = rp/rs = Tan(\Psi) \, exp(i\Delta)$$

As alluded to, the practice of ellipsometry requires that a mathematical model be derived and provided for a sample system and for the ellipsometer system being applied. In that light it must be appreciated that an ellipsometer system which is applied to investigate a sample system is, generally, sequentially comprised of:

a. a Source of a beam electromagnetic radiation;

b. a Polarizer element;

c. optionally a compensator element;

d. (additional element(s));

e. a sample system;

f. (additional element(s));

g. optionally a compensator element;

h. an Analyzer element; and

i. a Spectroscopic Detector System.

Each of said components b. - i. must be accurately represented by a mathematical model of the ellipsometer system along with a vector which represents a beam of electromagnetic radiation provided from said source of a beam electromagnetic radiation, Identified in a. above)

Various conventional ellipsometer configurations provide that a Polarizer, Analyzer and/or Compensator(s) can be rotated during data acquisition, and are describe variously as Rotating Polarizer (RPE), Rotating Analyzer (RAE) and Rotating Compensator (RCE) Ellipsometer Systems. It is noted, that nulling ellipsometers also exist in which elements therein are rotatable in use, rather than rotating. Generally, use of a nulling ellipsometer system involves imposing a substantially linear polarization state on a beam of electromagnetic radiation with a linear polarizer, causing the resulting polarized beam of electromagnetic radiation to interact with a sample system, and then adjusting an analyzer to an azimuthal azimuthal angle which effectively cancels out the beam of electromagnetic radiation which proceeds past the sample system. The azimuthal angle of the analyzer at which nulling occurs provides insight to properties of the sample system.

Continuing, in use, data sets can be obtained with an ellipsometer system configured with a sample system present, sequentially for cases where other sample systems are present, and where an ellipsometer system is configured in a straight-through configuration wherein a beam of electromagnetic radiation is caused to pass straight through the ellipsometer system without interacting with a sample system. Simultaneous mathematical regression utilizing multiple data sets corresponding to various configurations allows calibration of ellipsometers and evaluation of sample system characterizing PSI and DELTA values over a range of wavelengths. Thus obtaining numerous data sets with an ellipsometer system configured with, for instance, a sequence of sample systems present and/or wherein a sequential plurality of polarization states imposed on an electromagnetic beam caused to interact with a sample system allows system calibration of numerous ellipsometer system variables.

The foregoing provides general insight to ellipsometry. With said foregoing in mind, attention is now turned to background relevant to the present invention which is a practical ellipsometer or polarimeter system for application in the range of frequencies between 300 GHz or below well into the Terahertz range. It is noted that known prior art demonstrates that it is not unknown to propose, or provide a system for, and practice of ellipsometry at Terahertz (THz) frequencies, however, a high quality specific embodiment that makes such possible, and which is suitable for general application in universities and industry etc., has not been previously disclosed. To the Applicant's knowledge, there are no commercially available THz ellipsometers or polarimeters available in the market place.

While Synchrotrons have been used to provide THz frequency band electromagnetic radiation in ellipsometers, it is not remotely possible to provide a Synchrotron at every location whereat it is desired to practice THz ellipsometry. The present invention provides combination of many elements, which results in a novel, practical system for general application in the market place.

Further, it is also of benefit to define some terminology. First, a generally accepted range for what constitutes a Terahertz range of frequencies is from about $3 \times 10^{11}$ (ie. 300 GHz), to $1.3 \times 10^{12}$ (ie. 1.3 Thz), Hertz. The Terahertz range is sandwiched between the microwave, (the high end of which has a wavelength of 1 millimeter), and the far-infrared, (the long-wavelength edge of which is 100 micrometers), ranges of wavelengths/frequencies.

Also, it is noted that a number of sources of Terahertz (THz) electromagnetic radiation exit. For instance, a Smith-Purcell cell is a device which directs an energetic beam of electrons very close to a ruled surface of a diffraction grating. The effect on the trajectory of the beam is negligible, but a result is that Cherenkov radiation in the Terahertz frequency range can be created, where the phase velocity of the electromagnetic radiation is altered by the periodic grating. Another source of Terahertz radiation is a Free Electron Laser. In this source a beam of electrons is accelerated to relativistic speed and caused to pass through a periodic transverse magnetic field. The array of magnets is sometimes called an undulator or "wiggler" as it causes the electrons to form a sinusoidal path. The acceleration of he electrons causes release of photons, which is "synchrotron radiation". Further, the electron motion is in phase with the field of said released electromagnetic radiation, and therefore the fields add coherently. Instabilities in the electron beam resulting from interactions of the oscillations in the undulators lead to emission of electromagnetic radiation, wherein electrons radiate independently. The wavelength of the emitted electromagnetic radiation from the electrons can be adjusted by adjusting the energy of the electron beam and/or magnetic field strength of the undulators, to be in the Terahertz range. Another source, (and preferred in the present invention), of Terahertz frequencies is a Backward Wave Oscillator (BWO), which is a vacuum tube system comprising an electron gun that generates an electron beam and causes it to interact with an electromagnetic wave traveling in a direction opposite to that of ejected electrons such that THz frequency oscillations are sustained by interaction between the propagating traveling wave backwards against the electron beam.

It is also disclosed that numerous detectors exist for monitoring Terahertz range electromagnetic radiation. One example is a Golay cell, which is preferred in the present invention and which operates by converting a temperature change resulting from electromagnetic radiation impinging onto material, into a measurable signal. Generally, when electromagnetic radiation is caused to impinge on a blackened material it heats a gas, (eg. Xenon) in an first chamber of an enclosure, and that causes a distortable reflecting diaphram/film adjacent to said first chamber to change shape. In a second chamber, separated from the first by said diaphram/film an electromagnetic beam is caused to reflect from the film and into a photocell, which in turn converts the received electromagnetic radiation into an electrical signal. A Bolometer is another detector of monitoring Terahertz range electromagnetic radiation, but operates by using the effect of a changing electric resistance caused by electromagnetic radiation impinging onto a blackened metal.

It is also noted that there are Solid State sources and detectors of Terahertz frequency electromagnetic radiation. For instance, an identified reference by Nagashima et al. discloses that THz pulses can be generated by a bow-tie photoconductive radiation antenna excited by a mode-locked Ti-saphire laser with 80 Fs time width pulses, and a detection antenna can be formed from a dipole-type photoconductive antenna with a 5 micron gap fabricated on thin film LT-GaAs. Further, it is known that a company named AB Millimeter in Paris France, supplies a system that covers the entire range from 8 GHz to 1000 GHz with solid state source and detector devices.

Published Application US2005/0175507 by Tsukruk. contains the words ellipsometry and Golay, but does not describe an ellipsometer system comprising said elements.

Patent No. 5,317,618 to Nakahara et al., contains the words ellipsometer & free electron laser, but does not describe a combination of said elements.

Patent US 2010/0220313 A1 to Herzinger et al. describes a Terahertz-Infrared ellipsometer system with a three elements compensator.

A Patent to Wang et al., No. 5,914,492 is of interest as it describes free electron lasers used in combination with a Golay cell and Smith-Purcell detectors. However, it does not describe application in ellipsometry or polarimetry.

A Published Application, US2006/0050269 by Brownell describes use of a free electron laser and a Smith-Purcell detector, but not in the context of ellipsometry or polarimetry.

An article titled "Gain of a Smith-Purcell Free Electron Laser", Andrews et al., Phy. Rev., Vol 7, 070701 (2004), describes use of Smith-Purcell Free Electron Laser.

Patent No. 2,985,790 to Kompfner is disclosed as it describes a Backward Wave Oscillator.

Patent No. 2,880,355 to Epsztein is disclosed as it describes a Backward Wave Oscillator.

Known References which describe Ellipsometers which operate in the THz frequency range are:

"Terahertz Generalized Meuller-matrix Ellipsometry", Hofmann et al., Proc. of SPIE, Vol. 6120, pp. 61200D1-61200D10, (2005), describes applying Thz electromagnetic radiation in generalized ellipsometry wherein the source of the Thz electromagnetic radiation is a synchrotron located at BESSY, in Germany.

"Terahertz magneto-optic generalized ellipsometry using synchrotron and blackbody radiation", Hofmann et al., American Inst. of Physics, 77, 063902-1 through 063902-12, (2006), describes applying Thz electromagnetic radiation in generalized ellipsometry wherein the source of the Thz electromagnetic radiation is a synchrotron and a conventional blackbody. The use of an FTIR source and bolometer is also mentioned.

"Label-free Amplified Bioaffinity Detection Using Terahertz Wave Technology", Menikh et al., Biosensors and Bioelectronics 20, 658-662 (2004), describes use of an unbiased GaAs crystal THz source of electromagnetic radiation and a ZnTe crystal detector.

Spectroscopy by Pulsed Terahertz Radiation", Hango et al., Meas. Sci. and Technol., 13 (2002), pp 1727-1738, describes applying 30 GHz - 10 THz and describes use of Fourier Transform Spectrometers (FTS) in the Far Infrared (FIR) frequency range with the caution that such an approach is not easily applied below 1 THz. Said reference also describes application of Backward Wave Oscillators (BWO) plus frequency multipliers, with the caution that to cover the range of 30 GHz to 3 THz typically requires many BWO's and frequency multipliers to cover said frequency range. This article favors use of a Femto-sec laser (eg. a mode-locked Ti:saphire laser or Er-doped fiber laser in combination with a photoconductive antenna made on low-temperature grown GaAs).

"Measurement of Complex Optical Constants of a Highly Doped Si Wafer Using Terahertz Ellipsometry", Nagashima et al., Applied Phys. Lett. Vol. 79, No. 24 (10 Dec. 2001). This article describes use of a mode-locked Ti:saphire laser with a bow-tie antenna and GaAs detector antenna).

Published Patent Application No. US2004/0027571 by Luttman mentions using a THz light Source in an ellipsometer system.

"Development of Terahertz Ellipsometry and its Application to Evaluation of Semiconductors", Nagashima et al., Tech. Meeting on Light Application and Visual Science, IEEE (2002) proposes a Terahertz ellipsometer.

"Terahertz Imaging System Based on a Backward-Wave Oscillator, Dobroiu et al., Applied Optics, Vol. 43, No 30, (20 October 2004) describes use of a Terahertz source to provide electromagnetic radiation.

A Patent to Herzinger et al. No. 6,795,184, describes an "Odd-Bounce" system for rotating a polarization state in an electromagnetic beam. Patents disclosed in the Application leading to Patent No. 6,795,184 are:

Patent to Herzinger, No. 6,137,618 is disclosed as it describes a Single Brewster Angle Polarizer in the context of multiple reflecting means, and discloses prior art dual Brewster Angle Single Reflective Means Polarizer Systems.

Patent, to Herzinger et al., No. 6,084,675 describes an adjustable beam alignment compensator/retarder with application to spectroscopic ellipsometry.

Patent No. 6,118,537 to Johs et al. describes a multiple Berek plate optical retarder system.

Patent No. 6,141,102 to Johs et al. describes a single triangular shaped optical retarder element.

Patent No. 5,946,098 to Johs et al., describes dual tipped wire grid polarizers in combination with various compensator/retarder systems.

Patent No. 6,100,981 to Johs et al., describes a dual horizontally oriented triangular shaped optical retarder.

Patent No. 6,084,674 to Johs et al., describes a parallelogram shaped optical retarder element.

Patent No. 5,963,325 to Johs et al., describes a dual vertically oriented triangular shaped optical retarder element.

Patent Nos. 7,450,231 and 7,460,230 to Johs et al. are disclosed as they describe deviation angle self compensating compensator systems.

A Patent to Johs et al., No. 5,872,630 is disclosed as it describes an ellipsometer system in which an analyzer and polarizer are maintained in a fixed in position during data acquisition, while a compensator is caused to continuously rotate.

A Patent to Thompson et al. No. 5,706,212 is also disclosed as it teaches a mathematical regression based double Fourier series ellipsometer calibration procedure for application, primarily, in calibrating ellipsometers system utilized in infrared wavelength range. Bi-refringent, transmissive window-like compensators are described as present in the system thereof, and discussion of correlation of retardations entered by sequentially adjacent elements which do not rotate with respect to one another during data acquisition is described therein.

Further Patents disclosed in the 184 Patent are:

Nos. 5,757,494; and
5,956,145;

to Green et al., in which are taught a method for extending the range of Rotating Analyzer/Polarizer ellipsometer systems to allow measurement of DELTA'S near zero (0.0) and one-hundred-eighty (180) degrees, and the extension of modulator element ellipsometers to PSI'S of forty-five (45) degrees. Said Patents describes the presence of a variable, transmissive, bi-refringent component which is added, and the application thereof during data acquisition to enable the identified capability.

A Patent to He et al., No. 5,963,327 is disclosed as it describes an ellipsometer system which enables providing a polarized beam of electromagnetic radiation at an oblique angle-of-incidence to a sample system in a small spot area.

Patents of general interest disclosed in the 184 Patent include:

Patent to Woollam et al, No. 5,373,359, (describes a beam chopper);
Patent to Johs et al. No. 5,666,201;
Patent to Green et al., No. 5,521,706; and
Patent to Johs et al., No. 5,504,582;

and are disclosed as they pertain to ellipsometer systems.

A Patent to Coates et al., No. 4,826,321 is disclosed as it describes applying a reflected monochromatic beam of plane polarized electromagnetic radiation at a Brewster angle of incidence to a sample substrate to determine the thickness of a thin film thereupon. This Patent also describes calibration utilizing two sample substrates, which have different depths of surface coating.

Other US Patents which describe use of reflected electromagnetic radiation to investigate sample systems are:

Nos. RE 34,783,
4,373,817,
5,045,704to Coates; and
5,452,091to Johnson.

A Patent to Bjork et al., No. 4,647,207 is disclosed as it describes an ellipsometer system which has provision for sequentially, individually positioning a plurality of reflective polarization state modifiers in a beam of electromagnetic radiation. Patent Nos. 4,210,401; 4,332,476 and 4,355,903 are also identified as being cited in the 207 Patent. It is noted that systems as disclosed in these Patents, (particularly in the 476 Patent), which utilize reflection from an element to modify a polarization state can, if such an element is an essential duplicate of an investigated sample and is rotated ninety degrees therefrom, the effect of the polarization state modifying element on the electromagnetic beam effect is extinguished by the sample.

A Patent to Mansuripur et al., No. 4,838,695 is disclosed as it describes an apparatus for measuring reflectivity.

Patents to Rosencwaig et al., Nos. 4,750,822 and 5,596,406 are also identified as they describe systems which impinge electromagnetic beams onto sample systems at oblique angles of incidence. The 406 Patent provides for use of multiple wavelengths and multiple angles of incidence. For similar reasons Patent No. 5,042,951 to Gold et al. is also disclosed.

In addition to the identified Patents, certain Scientific papers were also disclosed in the 184 Patent are:
A paper by Johs, titled "Regression Calibration Method for Rotating Element Ellipsometers", Thin Solid Films, 234 (1993) is also disclosed as it describes a mathematical regression based approach to calibrating ellipsometer systems.

An additional relevant Patent is No. 6,268,917 to Johs. This Patent describes a combined polychromatic electromagnetic radiation beam source comprising beam combiners.

It is also disclosed that the J.A. Woollam Co., Inc. has marketed an IR range Ellipsometer, called the IR-VASE (Reg. TM), for many years. Said instrument provides capability from 10 THz to 150 THz and is a Variable Angle, Rotating Compensator system utilizing a Bomen FTIR Spectrometer. Further, it comprises an FTIR Source, and an Odd-Bounce image rotating system for rotating a polarization state imposed by a wire-grid polarizer. It is noted that as marketed, this system has never provided the capability to reach down to 1 THz, which capability was achieved via research in developing the present invention.

Additional references which describe ellipsometry practiced in the THz range are:

"THz Ellipsometry in Theory and Experiment", Dietz et al. 33rd International Conference on Infrared and Millimeter Waves and 16th International Conference on Terahertz Electronics, IRMMW-THz (2008) describes an experimental ellipsometer for use in the THz frequency range;

"Study Terahertz Ellipsometry Setups for Measuring Metals and Dielectrics Using Free Electron Laser Light Source", Rudych, 31st International Conference on Infrared and Millimeter Waves and 14th International Conference on Terahertz Electronics, IRMMW-THz (2006) describes use of a free electron laser to provide THz frequencies;

"Spectral THz Ellipsometer for the Unambiguous Determination of all Stokes Parameters", Holldack et al., 30th International Conference on Infrared and Millimeter Waves and 13th International Conference on Terahertz Electronics, IRMMW-THz (2006) describes a concept for determining all Stokes Parameters;

"Terahertz Magneto-Optic Generalized Ellipsometry Using Synchrotron and Blackbody Radiation", Esquinazi et al., Sci. Instrum., Vol. 7, No. 6 (2006) describes use of synchrotron generated electromagnetic radiation in magneto-optic generalized ellipsometry;

"Terahertz Generalized Mueller-Matrix Ellipsometry", Esquinazi et al. Proc. Int. Soc. Opt. Eng., Vol. 6120, (2006) describes synchrotron generated electromagnetic radiation in generalized Mueller Matrix ellipsometry

"THz Time-Domain Magneto-Optic Ellipsometry in Reflection Geometry", Kuwata-Gonokami et al., Trends Opt. Photonics Series, Vol. 97, (2004) describes determining a dielectric tensor using THz frequencies in magneto-optic optical measurements;

"Terahertz Polarimetry", Gallot et al., Conf. Lasers Electro-Optics, CLEO, Vol. 3 (2005) describes determining the polarization state of a THz wave over a wide range of frequencies;

"Evaluation of Complex Optical Constants of Semiconductor Wafers using Terahertz Ellipsometry", Hangyo et al., Trends Opt. Photonics Series, vol. 88, (2003) describes combining terahertz ellipsometry with time domain spectroscopy.

Additional references which describe sources of Terahertz frequency range electromagnetism are:

"Improved Performance of Hybrid Electronic Terahertz Generators", Hurlbut et al., 33rd International Conference on Infrared and Millimeter Waves and Terahertz Waves, IRMMW-THz (2008), describes combining BWO's with frequency multipliers;

"Terahertz Wave Generation in Orientation-Patterned GaAs Using Resonantly Enhanced Schemes", Vodopyanov et al., SPIE-Intl. Soc. for Opt. Eng. USA, Vol. 6455, (2007), describes application of Zincblende semiconductors (GaAs, GaP) to produce THz frequencies;

"Terahertz BWO Spectroscopy of Conductors and Superconductors", Gorshunov et al., Quantum Electronics, Vol. 37, No. 10 (Oct 2007), describes methods for directly measuring dielectric response spectra of dielectrics, conductors and superconductors using BWO generated spectrometers;

"Portable THz Spectrometers", Kozlov et al., 31st International Conference on Infrared and Millimeter Waves and 14th International Conference on Terahertz Electronics, IRMMW-THz (2007), describes a portable THz spectrometer which operates in the frequency range of 0.1 - 1 THz;

"Terahertz Time-Domain Spectroscopy", Nishizawa et al., Terahertz Optoelectronics, Topics Appl. Phys. 97, 203-271 (2005).

Patent No. 7,339,718 to Vodopanov et al., Issued 04/03/2008 describes a method for generating THz radiation comprising illuminating a semiconductor with an optical pulse train.

Patent Nos. 6,819,423 to Stehle et al., Issued 11/16/2004 and 5,317,618 Issued 1/25/2005 are also identified as they mention application of THz frequencies in an ellipsometer system.

Even in view of relevant prior art, there remains need for an ellipsometer or polarimeter system for application in the Terahertz region, preferably in combination with a convenient approach to providing linearly polarized beams of electromagnetic radiation in which the azimuthal angle of the linear polarization can be controlled.

DISCLOSURE OF THE INVENTION

The present invention is a terahertz ellipsometer or polarimeter system that basically, sequentially comprises:

a source (BWO) of terahertz frequency electromagnetic radiation;

a rotatable polarizer (WGP1);

a stage (STG) for supporting a sample (S);

a second rotatable polarizer (WGP2); and

a detector (DET) of terahertz electromagnetic radiation.

Said terahertz ellipsometer or polarimeter system further comprises a first rotating element (RE1) and second rotating element (RE2) between said source (BWO) and said detector (DET), which can be both be on the source (BWO), or on the detector (DET) side of the stage (STG); but are preferably distributed one on each side. It is also noted that the preferred source is a Backward wave oscillator and the preferred detector is a Golay cell.

Using the preferred embodiment description, in use said backward wave oscillator (BWO) directs a beam (BI) of terahertz frequency electromagnetic radiation of a fundamental frequency to pass through said first rotatable polarizer, then reflect from a sample (S) placed on said stage (STG) for supporting a sample, then pass through said second rotatable polarizer, and, as output beam (BO) enter said Golay cell detector (DET), with said beam of electromagnetic radiation also passing through said first (RE1) and second (RE2) rotating elements.

As alluded to, a preferred embodiment provides that said first rotating element (RE1) and second rotating element (RE2) are on the (BWO) and (DET) sides of said stage (STG) and sample (S), respectively. When this is the case, in use, said backward wave oscillator (BWO) directs a beam (BI) of terahertz frequency electromagnetic radiation of a fundamental frequency to pass through said first rotatable polarizer, that preferably comprises a wire grid (WGP1), then through said first rotating element (RE1), then reflect from a sample (S) placed on said stage (STG) for supporting a sample, then pass through said second rotating element (RE2), then pass through said second rotatable polarizer, that preferably comprises a wire grid (WGP2), and, as output beam (BO) enter said Golay cell detector (DET).

Said basic terahertz ellipsometer or polarimeter system can provide that the first (RE1) and second (RE2) rotating elements are each selected from the group consisting of:

one thereof is a rotating polarizer comprising a wire grid (RWGP); and

the other thereof is a rotating retarder (RRET) comprising, in any functional order, first (RP), second (RM1), third (RM2) and fourth (RM3) reflective elements from each of which, in use, an electromagnetic beam reflects once, said first reflective element (RP) being prism (RP) which receives a beam through a first side thereof and exits a reflected beam through a third side thereof, said reflection being from a second side thereof oriented at prism forming angles to said first and third sides; said elements (RP) (RM1) (RM2) (RM3) being oriented with respect to one another such that the locus of the beam reflecting from the second side of said prism approaches said second reflective side thereof at an angle equal to or greater than that required to achieve total internal reflection within said prism (RP), and such that the locus of beam reflected from the fourth element in the sequence of elements is substantially colinear and without deviation or displacement from the locus of the beam received by the first element in said sequence of elements.

(Note, the preferred embodiment provides the first rotating element (RE1) be a rotating polarizer comprising a wire grid (RWGP) and the second rotating element (RE2) be a rotating retarder (RRET) comprising, in any functional order, said first (RP), second (RM1), third (RM2) and fourth (RM3) reflective elements, with the preferred configuration of (RRET) being that the said prism (RP) be placed so as to first encounter an input beam).

Said basic terahertz ellipsometer or polarimeter can further sequentially comprise:

a frequency multiplier (FM) following said backward wave oscillator (BWO);

a first concave parabolic mirror (PM1); and a reflecting means (M1);

prior to said rotatable polarizer comprising a wire grid (WGP1).

Further, after said polarizer comprising a wire grid (WGP1) said basic terahertz ellipsometer or polarimeter can further comprise:

a second concave parabolic mirror (PM2);

prior to said first rotating element (RE1)-(RWGP).

And, there can further sequentially be, after said second rotating element (RE2)-(RRET), a third concave parabolic mirror (PM3).

Also, further sequentially after said second rotatable polarizer comprising a wire grid (WGP2) there can be: a fourth concave parabolic mirror (PM4) prior to said Golay cell detector (DET).

In use, with the foregoing additional elements in place, said backward wave oscillator (BWO) directs a beam (BI) of terahertz frequency electromagnetic radiation of a fundamental frequency to said frequency multiplier (FM), from which frequency multiplier (FM) a beam comprising a desired frequency is caused to be reflected from said first concave parabolic mirror (PM1) as a substantially collimated beam, said substantially collimated beam then being directed to reflect from said reflecting means (M1) and pass through said first rotatable polarizer comprising a wire grid (WGP1) and reflect from said second concave (PM2) parabolic mirror through said first rotating element (RE1), then reflect from a sample (S) placed on said stage (STG) for supporting a sample, then pass through said second rotating element (RE2), reflect from said third parabolic mirror (PM3), pass through said second rotatable polarizer comprising a wire grid (WGP2), then reflect from said fourth concave parabolic mirror (PM4) and enter said Golay cell detector (DET) as output beam (BO).

Said basic terahertz ellipsometer or polarimeter can more simply comprise, between said backward wave oscillator (BWO) and said Golay cell detector (DET) at least one selection from the group consisting of:

at least one concave parabolic mirror (PM1) (PM2) (PM3) (PM4); and

at least one reflecting means (M1).

Said basic terahertz ellipsometer or polarimeter can more simply comprise a frequency multiplier (FM) following said backward wave oscillator (BWO).

Said basic terahertz ellipsometer or polarimeter can also comprise a chopper (CHP) between said backward wave oscillator (BWO) and said Golay cell detector (DET).

Said basic terahertz ellipsometer or polarimeter system can further comprise means for rotating, as a unit:

elements between said stage (STG) for supporting a sample (S) and said Golay cell detector (DET), (eg. stage (STG) for supporting a sample (S); second rotating element, third concave parabolic mirror (PM3) if present; second rotatable polarizer comprising a wire grid (WGP2); fourth concave parabolic mirror (PM4) if present; and Golay cell detector (DET));

and/or as a unit:

elements between said stage (STG) for supporting a sample (S) and backward wave oscillator (BWO), (eg. stage (STG) for supporting a sample (S); first rotating element; second concave parabolic mirror (PM2) if present; rotatable polarizer comprising a wire grid (WGP1); reflecting means (M1) if present; first concave parabolic mirror (PM1) if present; frequency multiplier (FM) if present; and backward wave oscillator (BWO));

about a vertical axis centered at a midpoint of said stage (STG) for supporting a sample (S). This enables control of the angle of incidence ($\theta$) at which said beam of terahertz frequency electromagnetic radiation approaches said sample (S) from said rotating polarizer comprising a wire grid (RWGP), and the angle of reflection ($\theta$) of said beam from said sample (S) placed on said stage (STG) for supporting a sample.

Said basic terahertz ellipsometer or polarimeter system can provide that the stage (STG) for supporting a sample (S) is oriented to support a sample in a substantially vertical plane, or in a substantially horizontal plane.

Where the stage (STG) is to be oriented substantially horizontally, an enabling system can provide for receiving a beam exiting said first rotating element (RE1) and directing it to the stage (STG) via left and right vertical sequences, each of first (FLS/FRS), second (SLS/SRS) and third (TLS/TRS) elements, such that the terahertz frequence electromagnetic beam exiting said first rotating element reflects from the first left side element (FLS) to the second left side element (SLS), then to the third right side element (TRS), from which it is directed to reflect from a sample (S) placed on the stage (STG) in a substantially horizontal plane toward the third left side element (TLS), which reflects said beam to the second right side element (SRS) toward said first right side element (FRS), from which said beam is directed into said second rotating element (RE2).

Said terahertz ellipsometer or polarimeter system can involve a rotating polarizer that comprises a wire grid selected from the group consisting of:

a dual polarizing component system comprising non-Brewster Angle (NBR) and Brewster (BR) Angle components, wherein a beam of electromagnetic radiation that passes through said non-Brewster angle (NBR) component, that comprises a wire grid, reflects from additional reflective means (M1) and (M2), then from (BR), and continues as a polarized beam); and

a dual tipped wire grid polarizer system comprising first (WG1) and second (WG2) wire grid polarizers which have fast axes of polarization oriented with their fast axes parallel to one another, each thereof having first and second essentially parallel surfaces, such that essentially parallel sides of (WG1) are tipped with respect to the essentially parallel sides of (WG2), wherein a beam entering one of said first and second wire grid polarizers exits the second thereof in a polarized state, with unwanted reflections (R1) and (R2) being diverted away.

Said basic terahertz ellipsometer or polarimeter can further comprise at least one aperture (A) between said backward wave oscillator (BWO) and said Golay cell detector (DET).

It is also noted that said terahertz ellipsometer or polarimeter system can provide that the first (RE1) and second (RE2) rotating elements are rotated at relative speeds with respect to one another that form a ratio in the range of 1 to 10 or in the range of 10 to 1.

Before proceeding, it is noted that the present invention can utilize any functional rotatable or rotating polarizer that comprises or does not comprise a wire grid. However, the preferred embodiment of the present invention applies a polarizer that is per se., or comprises a wire grid. Further, while it is preferred to use a Golay cell detector in the present invention, any functional detector of Terahertz electromagnetic radiation can be used, (eg. a bolometer or solid state device).

A method of determining physical and optical properties of samples using a terahertz frequency electromagnetic radiation utilizing a preferred embodiment of the present invention, comprises the steps of:

a) providing a terahertz ellipsometer or polarimeter system sequentially system comprising:

a backward wave oscillator (BWO);

a rotatable polarizer comprising a wire grid (WGP1);

a rotating polarizer comprising a wire grid (RWGP);

a stage (STG) for supporting a sample (S);

a rotating retarder (RRET) comprising, in any functional order, first (RP), second (RM1), third (RM2) and fourth (RM3) reflective elements from each of which, in use, an electromagnetic beam reflects once, said first reflective element (RP) being prism (RP) which receives a beam through a first side thereof and exits a reflected beam through a third side thereof, said reflection being from a second side thereof oriented at prism forming angles to said first and third sides; said elements (RP) (RM1) (RM2) (RM3) being oriented with respect to one another such that the locus of the beam reflecting from the second side of said prism approaches said second reflective side thereof at an angle equal to or greater than that required to achieve total internal reflection within said prism (RP), and such that the locus of beam reflected from the fourth element in the sequence of elements is substantially colinear and without deviation or displacement from the locus of the beam received by the first element in said sequence of elements.

a second rotatable polarizer comprising a wire grid (WGP2);

a Golay cell detector (DET);

such that in use said backward wave oscillator (BWO) directs a beam (BI) of terahertz frequency electromagnetic radiation of a fundamental frequency to pass through said first rotatable polarizer comprising a wire grid (WGP1), then through said rotating polarizer comprising a wire grid (RWGP), then reflect from a sample (S) placed on said stage (STG) for supporting a sample, then pass through said rotating retarder (RRET), then pass through said second rotatable wire grid polarizer (WGP2), enter said Golay cell detector (DET) as output beam (BO).

Said method continues with:

b) placing a sample (S) on said stage (STG) for supporting samples;

c) causing said backward wave oscillator (BWO) to direct a beam (BI) of terahertz frequency electromagnetic radiation of a fundamental frequency to pass through said first rotatable wire grid polarizer (WGP1) and then through said rotating polarizer comprising a wire grid (RWGP), then reflect from a sample (S) placed on said stage (STG) for supporting a sample, then pass through said rotating retarder (RRET), then pass through said second rotatable polarizer comprising a wire grid (WGP2), and enter said Golay cell detector (DET) as output beam (BO);

d) obtaining sample describing data from said Golay cell detector (DET).

Said method can involve that the step of providing a terahertz ellipsometer or polarimeter system further comprises providing:

a frequency multiplier (FM) following said backward wave oscillator (BWO);

a first concave parabolic mirror (PM1); and

a reflecting means (M1);
prior to said rotatable polarizer comprising a wire grid (WGP1);
and which further sequentially comprises after said rotatable polarizer comprising a wire grid (WGP1);

a second concave parabolic mirror (PM2);
prior to said a rotating polarizer comprising a wire grid (RWGP);

there also further sequentially being, after said rotating retarder (RRET), a third concave parabolic mirror (PM3); and there also further sequentially being, after said second rotatable polarizer comprising a wire grid (WGP2);

a fourth concave parabolic mirror (PM4) prior to said Golay cell detector (DET);

such that in use said backward wave oscillator (BWO) directs a beam (BI) of terahertz frequency electromagnetic radiation of a fundamental frequency to said frequency multiplier (FM), from which frequency multiplier (FM) a beam comprising a desired frequency is caused to be reflected from said first concave parabolic mirror (PM1) as a substantially collimated beam, said substantially collimated beam then being directed to reflect from said reflecting means (M1) and pass through said first rotatable polarizer comprising a wire grid (WGP1) and reflect from said second concave (PM2) parabolic mirror through said rotating polarizer comprising a wire grid (RWGP), then reflect from a sample (S) placed on said stage (STG) for supporting a sample, then pass through said rotating retarder (RRET), reflect from said third parabolic mirror (PM3), pass through said second rotatable polarizer comprising a wire grid (WGP2), then reflect from said fourth concave parabolic mirror (PM4) and enter said Golay cell detector (DET) as output beam (BO).

Said method can involve the sample (S) being oriented in a substantially vertical plane while data is obtained from said Golay cell detector (DET).

Said method can involve the sample (S) being oriented in a substantially horizontal plane, and a preferred approach by which this can be accomplished comprises application of a system comprising left and right vertical sequences of first (FLS/FRS), second (SLS/SRS) and third (TLS/TRS) elements, such that the terahertz frequence electromagnetic beam exiting said rotating polarizer comprising a wire grid (RWGP) reflects from the first left side element (FLS) to the second left side element (SLS), then to the third right side (TRS) element, from which it is directed to reflect from a sample (S) placed on the stage (STG) in a substantially horizontal plane toward the third left side (TLS) element, which reflects said beam to the second right side element (SRS) toward said first right side element (FRS), from which said beam is directed into said second rotating retarder (RE2).

Said method can further comprise providing means for rotating, as a unit:

elements between said stage (STG) for supporting a sample (S) and Golay cell detector (DET); (eg. said stage (STG) for supporting a sample (S); rotating retarder (RRET), third concave parabolic mirror (PM3) if present; second rotatable polarizer comprising a wire grid (WGP2); fourth concave parabolic mirror (PM4) if present; and Golay cell detector (DET));

and/or as a unit:

elements between said stage (STG) for supporting a sample (S) and backward wave oscillator (BWO), (eg. stage (STG) for supporting a sample (S); rotating wire grid polarizer (RWGP); second concave parabolic mirror (PM2) if present; rotatable polarizer comprising a wire grid (WGP1); reflecting means (M1) if present; first concave parabolic mirror (PM1) if present; frequency multiplier (FM) if present; and backward wave oscillator (BWO));

about a vertical axis centered at a midpoint of said stage (STG) for supporting a sample (S) such that the angle of incidence ($\theta$) at which said beam of terahertz frequency electromagnetic radiation approaching from said rotating polarizer comprising a wire grid (RWGP), and the angle of reflection ($\theta$) of said beam from said sample (S) placed on said stage (STG) for supporting a sample, can be adjusted; and

prior to step d causing rotation of the unit about said vertical midpoint axis of said stage.

Said method can further involve providing a chopper (CHP), said chopper (CHP) being a rotating wheel with a plurality of openings therein through which the terahertz electromagnetic radiation beam can pass, said chopper (CHP) being placed the locus of the terahertz electromagnetic radiation beam at some point between said backward wave oscillator and said Golay cell detector, and during the step d obtaining of data, causing said chopper to chop said terahertz frequency beam.

Said method can involve rotating the rotating polarizer comprising a wire grid (RWGP) and the rotating retarder (RRET) comprising first (RP), second (RM1), third (RM2) and fourth (RM3) elements, at relative speeds with respect to one another that form a ratio in the range of 1 to 10 or in the range of 10 to 1 during the step d obtaining of data.

Finally, said method can further comprise performing at least one selection from the group consisting of:

storing at least some data provided by said Golay cell detector in machine readable media;

analyzing at least some of the data provided by said Golay cell detector and storing at least some of the results of said analysis in machine readable media;

displaying at least some data provided by said Golay cell detector by electronic and/or non-electronic means;

analyzing at least some of the data provided by said Golay cell detector and displaying at least some of the results of said analysis by electronic and/or non-electronic means;

causing at least some data provided by said Golay cell detector to produce a signal which is applied to provide a concrete and tangible result;

analyzing at least some of the data provided by said Golay cell detector and causing at least some thereof to produce a signal which is applied to provide a concrete and tangible result.

The present invention will be better understood by reference to the Detailed Description Section of this Specification, in combination with the Drawings.

BRIEF DESCRIPTION OF THE DRAWINGS

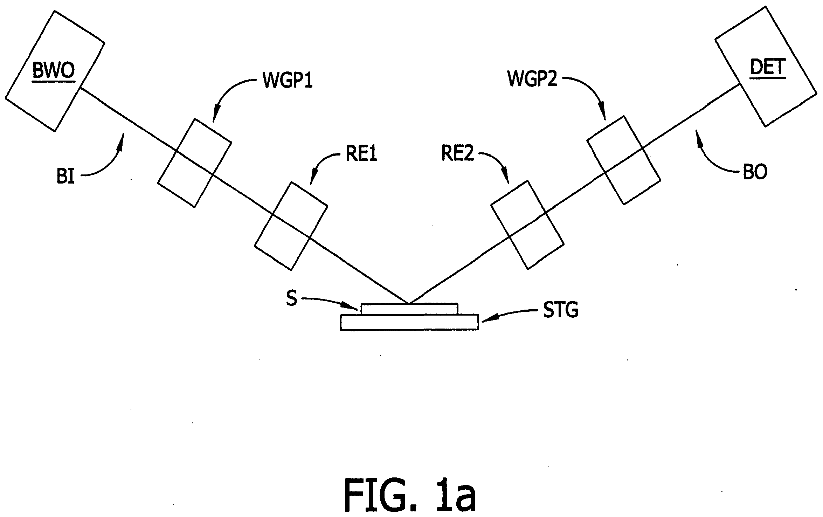

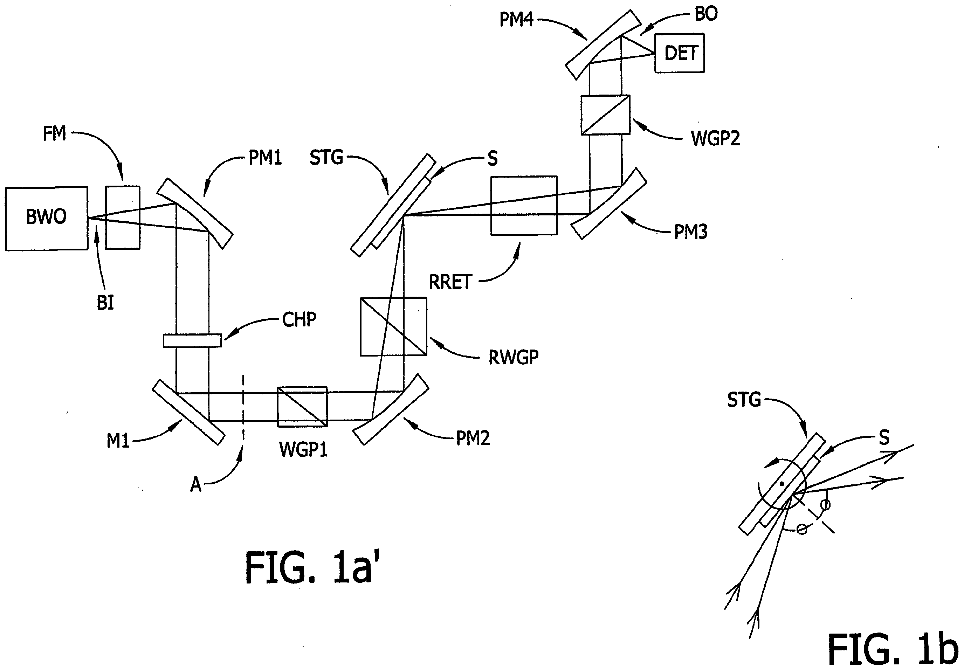

Fig. 1a shows a basic present invention THZ ellipsometer or polarimeter.

Fig. 1a' shows a more detailed embodiment of a present invention THZ ellipsometer or polarimeter.

Fig. 1b shows that the Fig. 1a' preferred embodiment of a present invention THZ ellipsometer or polarimeter can be rotated to enable achieving different angles-of-incidence (AOI).

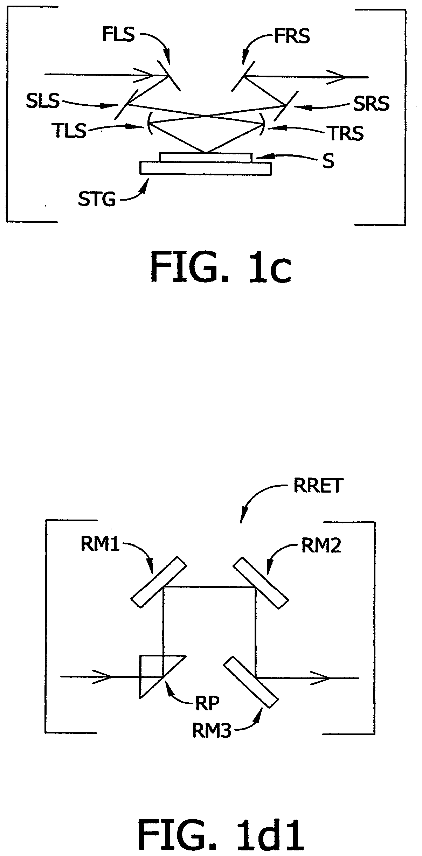

Fig. 1c shows a system for enabling the present a invention sample to be oriented horizontally.

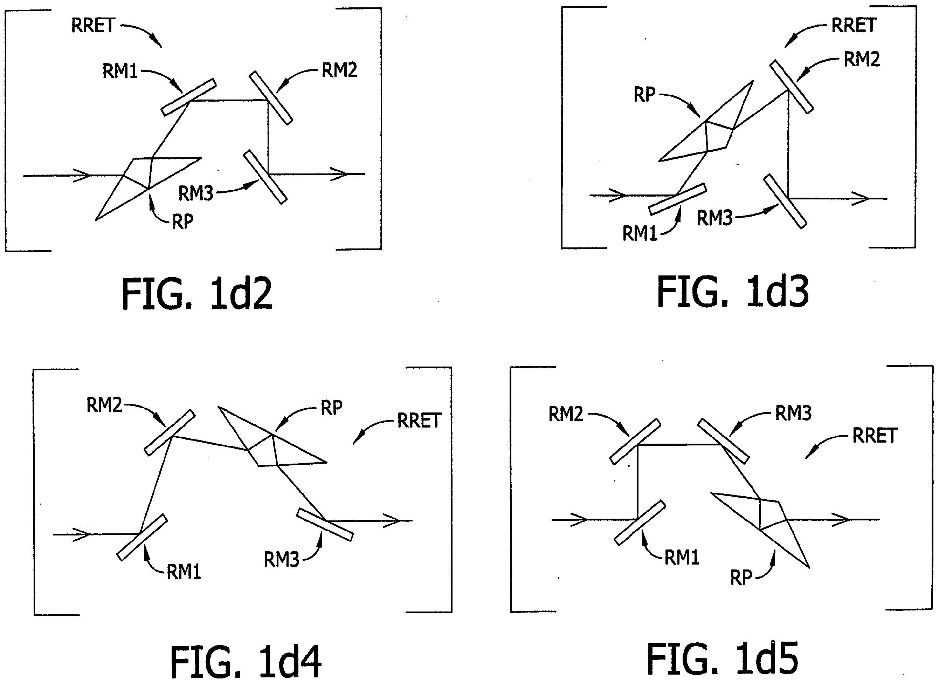

Fig. 1d1 shows a retarder applied as a rotating retarder (RRET) in Figs. 1a and 1a'.

Figs. 1d2 - 1d5 show the rotating retarder in Fig. 1d1 configured so that, in any of the embodiments, the electromagnetic beam passing therethrough totally internally reflects in prism (RP).

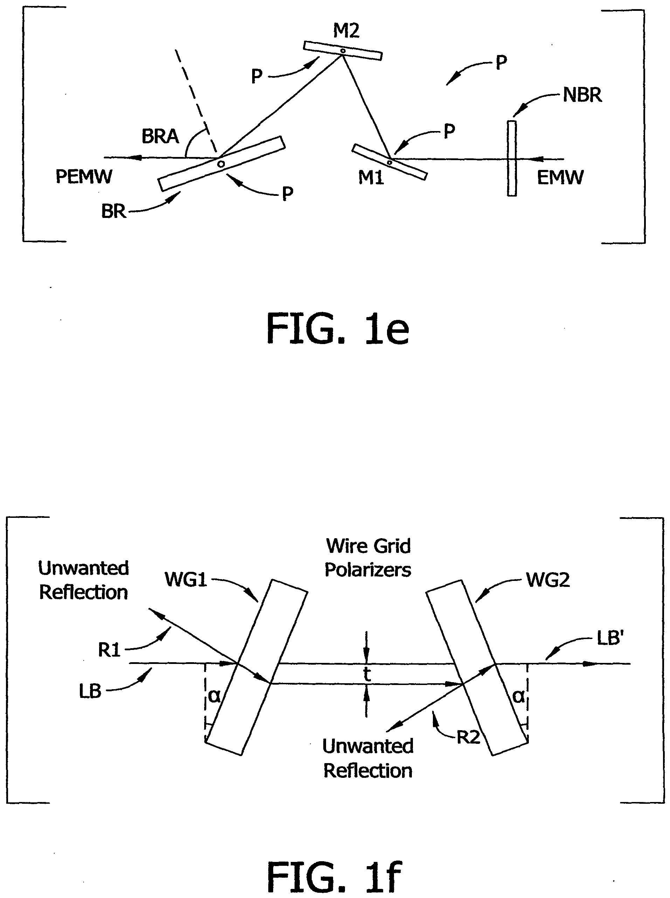

Fig. 1e shows a combined Brewster Angle and non-Brewster angle embodiment of a Fig. 1a or 1a' polarizer (WGP1), (RWGP), (WGP2).

Fig. lf demonstrates a dual tipped wire grid polarizer of a Fig. 1a or 1a' polarizer (WGP1), (RWGP), (WGP2).

Figs. 2a - 2d show various aspects of Terahertz frequency Sources.

Figs. 2e - 2g show demonstrative detectors of Terahertz frequencies.

Fig. 3 demonstrates data which can be achieved by application of the Present Invention, including in a frequency range between about 1.0 and 1.4 THz.

Fig. 4 demonstrates displaying data obtained by practice of the present invention using a computer.

DETAILED DESCRIPTION

Turning now to the Drawings, Fig. 1a shows that a basic present invention terahertz (THZ) ellipsometer or polarimeter system comprises:

a backward wave oscillator (BWO);

a rotatable wire grid polarizer (WGP1);

a first rotating element (RE1);

a stage (STG) for supporting a sample (S);

a second rotating element (RE2)

a second rotatable wire grid polarizer (WGP2);

a Golay cell detector (DET).

In use said backward wave oscillator (BWO) directs a beam (BI) of terahertz frequency electromagnetic radiation of a fundamental frequency to pass through said first rotatable element (WGP1), then through said first rotating element (RE1), then reflect from a sample (S) placed on said stage (STG) for supporting a sample, then pass through said second rotating element (RE2), then pass through said second rotatable wire grid polarizer (WGP2), and enter said Golay cell detector (DET) as beam (BO).

It is noted that a preferred embodiment provides that said first rotating element (RE1) comprises:

a retarder comprising a wire grid (RWGP);

and said second rotating element (RE2) comprises:
a rotating retarder (RRET) comprising, in any functional order, first (RP), second (RM1), third (RM2) and fourth (RM3) reflective elements, said first reflective element (RP) being prism (RP) which receives a beam through a first side thereof and exits a reflected beam through a third side thereof, said reflection being from a second side thereof oriented at prism forming angles to said first and third sides; said elements (RP) (RM1) (RM2) (RM3) being oriented with respect to one another such that the locus of the beam reflecting from the second side of said prism approaches said second reflective side thereof at an angle equal to or greater than that required to achieve total internal reflection within said prism (RP), and such that the locus of beam reflected from the fourth element in the sequence of elements is substantially colinear and without deviation or displacement from the locus of the beam received by the first element in said sequence of elements.

Fig. la', which shows a more detailed present invention demonstrating that the preferred embodiment comprises a terahertz ellipsometer sequentially system comprises:

a backward wave oscillator (BWO);

an optional frequency multiplier (FM);

an optional first concave parabolic mirror (PM1);

an optional reflecting means (M1);

a first rotatable wire grid polarizer (WGP1);

an optional aperture (A);

an optional second concave parabolic mirror (PM2);

a rotating wire grid polarizer (RWGP);

a stage for (STG) supporting a sample (S);

a rotating retarder (RRET);

an optional third concave parabolic mirror (PM3);

a second rotatable wire grid polarizer (WGP2);

an optional fourth concave parabolic mirror (RM4); and

a Golay cell detector (DET).

Considering all elements are present, in use said backward wave oscillator (BWO) directs a beam (BI) of terahertz frequency electromagnetic radiation of a fundamental frequency to said frequency multiplier (FM), from which frequency multiplier (FM) a beam comprising a desired frequency is caused to be reflected from said first concave parabolic mirror (PM1) as a substantially collimated beam, said substantially collimated beam is then directed to reflect from said reflecting means (M1) and pass through said optional aperture (A), (if present), and first rotatable wire grid polarizer (WGP1), and reflect from said second concave parabolic mirror (PM2) through said rotating wire grid polarizer (RWGP), then reflect from a sample (S) placed on said stage (STG) for supporting a sample, then pass through said rotating retarder (RRET), reflect from said third parabolic mirror (PM3), pass through said second rotatable wire grid polarizer (WGP2), then reflect from said fourth concave parabolic mirror (PM4) and enter said Golay cell detector (DET) as beam (BO).

(Note: if optional Aperture (A) is present it can be located at any functional location between the Source (BWO) and detector (DET). Further, there can be more than one aperture present therebetween).

Considering only the necessary elements are present, in use said backward wave oscillator (BWO) directs a beam of terahertz frequency electromagnetic radiation of a fundamental frequency and pass through said first rotatable wire grid polarizer (WGP1), then through said rotating wire grid polarizer (RWGP), then reflect from a sample (S) placed on said stage (STG) for supporting a sample, then pass through said rotating retarder (RRET), pass through said second rotatable wire grid polarizer (WGP2), then enter said Golay cell detector (DET).

Fig. 1b indicates that the Fig. 1a' terahertz ellipsometer system can further comprise means for rotating, as a unit, said:

stage (STG) for supporting a sample (S);

rotating retarder comprising first (RP), second (RM1), third (RM2) and fourth (RM3) elements,

third concave parabolic mirror (PM3) if present;

second rotatable wire grid polarizer (WGP2);

fourth concave parabolic mirror (PM4) if present; and

Golay cell detector (DET);

about a vertical axis centered at a midpoint of said stage (STG) for supporting a sample (S) such that the angle of incidence ($\theta$) at which said beam of terahertz frequency electromagnetic radiation approaching from said rotating wire grid polarizer (RWGP), and the angle of reflection ($\theta$) of said beam from said sample (S) placed on said stage (STG) for supporting a sample, can be adjusted.

Fig. 1b is to also be interpreted to show that, as a unit, said:

backward wave oscillator (BWO);

frequency multiplier (FM) if present;

first concave parabolic mirror (PM1) if present;

reflecting means (M1) if present;

rotatable wire grid polarizer (WGP1);

second concave parabolic mirror (PM2) if present;

rotating wire grid polarizer (RWGP); and

said stage (STG);

can, in the alternative, or also be rotated about a vertical axis centered at a midpoint of said stage (STG) for supporting a sample (S) such that the angle of incidence ($\theta$) at which said beam of terahertz frequency electromagnetic radiation approaching from said rotating wire grid polarizer (RWGP), and the angle of reflection (θ) of said beam from said sample (S) placed on said stage (STG) for supporting a sample, can be adjusted.

The terahertz ellipsometer system can further comprise a beam chopper (CHP), said beam chopper (CHP) being of any functional design, but typically being a rotating wheel with a plurality of openings therein through which the terahertz electromagnetic radiation beam can pass, said chopper being placed the locus of the terahertz electromagnetic radiation beam at some point between said backward wave oscillator and said Golay cell detector, said wheel can be made from high density polyethelyene or metal. Note the position of the chopper (CH) in Fig. 1a' is demonstrative, not limiting. The chopper (CHP) can be located at any functional location in the terahertz ellipsometer system.

(Note, while Figs. 1a and 1a' show the rotating wire grid polarizer (RWGP) before the stage (STG) and sample (S) and the rotating retarder (RRET) thereafter, while preferred this is to be considered demonstrative and not limiting. That is, said positions of the (RWGP) and (RRET) can be reversed and provide a functional present invention).

Fig. 1c shows a system that allows said terahertz ellipsometer system to orient the stage (STG) for supporting a sample (S) in a substantially horizontal plane. Note that the stage (STG) for supporting a sample (S) is oriented to support a sample in a substantially horizontal plane and in which the beam is directed thereto via left and right vertical sequences, each of first (FLS/FRS) second (SLS/SRS) and third (TLS/TRS) elements, such that the terahertz frequence electromagnetic beam exiting said rotating wire grid polarizer (RWGP) reflects from the first left side element (FLS) to the second left side element (SLS), then to the third right side element (TRS), from which it is directed to reflect from a sample (S) placed on the stage (STG) in a substantially horizontal plane toward the third left side element (TLS), which reflects said beam to the second right side element (SRS) toward said first right side element (FRS), from which said beam is directed into said rotating retarder (RRET) in Fig. 1a'.

It is noted that said terahertz ellipsometer system is typically oriented to mount samples (S) to said stage (STG) for supporting a sample so that said sample (S) is in a substantially vertical plane as observed with respect to laboratory coordinates.

Fig. 1d1 shows that the terahertz ellipsometer system rotating retarder (RRDT) comprises a prism (RP), which receives a beam oriented perpendicular to a first side thereof and exits as a reflected beam oriented perpendicular to a third side thereof, said reflection being an internal reflection from a second side oriented at forty-five degree angles to said first and third sides. Said prism (RP) is shown as positioned as the first element, in a series of reflecting elements (RM1) (RM2) and (RM3) that the terahertz frequence electromagnetic beam encounters in said (RRET), although this is not required. Reflecting elements (RM1) (RM2) and (RM3) in combination with Prism (RP then provide a four element rotating retarder.

Preferred rotating retarder embodiments are shown in Figs. 1d2 - 1d4 wherein the prism (RP) is oriented to effect total internal reflection therewithin. Fig. 1d2 shows the most preferred embodiment. Importantly, all embodiments in Figs. 1d1 - 1d5 provide the at the beam exiting is substantially colinear with that entering, in that the locus of the exiting beam is substantially undeviated and undisplaced from that of the entering beam, even during its rotation about the beam locus. Further, Figs. 1d2-1d5 show that the first (RP), second (RM1), third (RM2) and fourth (RM3) reflective elements, (from each of which, in use, an electromagnetic beam reflects once), can be oriented in any order. In any of said configurations said the prism (RP) is termed the first reflective element, and it receives a beam through a first side thereof and exits a reflected beam through a third side thereof, with said reflection being from a second side thereof being a total internal reflection. Said prism second side is oriented at prism forming angles to said first and third sides. In any of the shown embodiments, said elements (RP) (RM1) (RM2) (RM3) are oriented with respect to one another such that the locus of the beam reflecting from the second side of said prism approaches said second reflective side thereof at an angle equal to or greater than that required to achieve total internal reflection within said prism (RP), and such that the locus of beam reflected from the fourth element in the sequence of elements is substantially colinear and without deviation or displacement from the locus of the beam received by the first element in said sequence of elements.

Continuing, while it is within the scope of the present invention to apply simple single element wire grid polarizers, as are typically applied to polarize THZ frequency range electromagnetic beams, Figs. 1e and 1f demonstrate preferred embodiments of THZ frequency polarizers.

Fig. 1e demonstrates a Polarizer (P) comprised of Non-Brewster Angle (NBR) and Brewster (BR) Angle components. Shown is a beam of electromagnetic radiation (EMW) that passes through said (NBR) reflects from reflective means (M1) and (M2) then from (BR) and continues as beam (PEMW). It is noted that the non-Brewster angle (NBR) polarizer is typically of a wire grid construction when THZ frequencies are utilized, and it is to be considered as representing a single element wire grid polarizer when the other components in Fig. 1e are neglected.

Fig. 1f demonstrates an alternative, and preferred polarizer, comprising a dual tipped wire grid polarizer system comprising first (WG1) and second (WG2) wire grid polarizers which have fast axes of polarization oriented with their fast axes parallel to one another, each thereof having first and second essentially parallel surfaces. Note however, that the essentially parallel sides of (WG1) are tipped with respect to the essentially parallel sides of (WG2), as characterized by the angle (∝). The purpose of angle (∝) is to divert unwanted reflections (R1) and (R2).

Note that both Polarizers in Figs. 1e and 1f provide substantially undeviated and undisplaced output beams therefrom, with respect to beams input thereto, even when the polarizer is rotated about the locus of a beam of electromagnetic radiation.

It is to be understood that while preferred embodiments of Polarizers provide a linear polarization as output, the present invention can be used with a substantially linearly polarizing polarizer, or a polarizer which provides partially linearly polarization. In the Claims the term "polarizer" should then be interpreted broadly to mean preferably a linear polarizer, but including polarizers which provide partially linearly polarization. Further, in combination with a Compensator, other polarization states can be achieved.

It is noted that in use terahertz ellipsometer system rotating wire grid polarizer (RWGP) and the rotating retarder (RRET) comprising first (RP), second (RM1), third (RM2) and fourth (RM3) elements are preferably, but not necessarily, rotated at relative speeds with respect to one another that form a ratio in the range of 1 - 10, or 10 - 1.

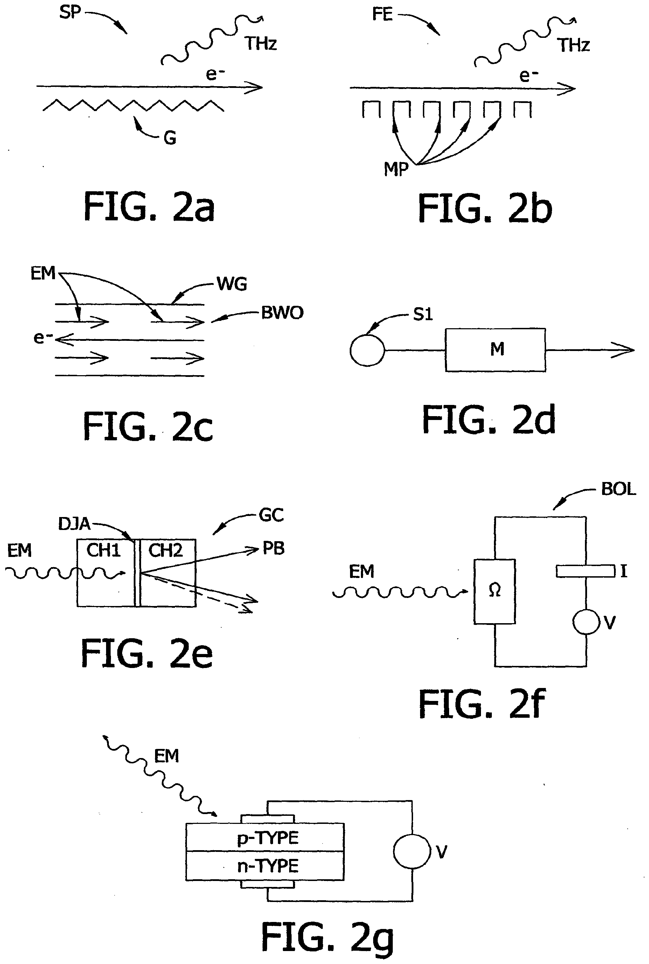

Drawings that are included for support of the present invention preferred embodiment of the invention shown in Figs. 1a' - 1f, rather than being essential thereto or limiting thereof, are presented as Figs. 2a - 4.

Turning now to Figs. 2a - 2d, insight to the operation of various Terahertz sources is provided. Fig. 2a shows that a Smith-Purcell (SP) cell comprises a Grating (G) and an electron beam (e⁻) passing thereover, with the result being that THz electromagnetic radiation is emitted. Fig. 2b shows that a Free Electron Laser (FE) comprises a sequence of Magnetic Poles (MP), and again an electron beam (e⁻) passing thereover, with the result being that THz electromagnetic radiation is emitted. Fig. 2c shows a Backward Wave Oscillator (BWO) comprises a Waveguide (WG) through which electromagnetic radiation (EM) is passed in one direction while an electron beam (e⁻) passes therethrough in the opposite direction, again with the result that THz electromagnetic radiation is emitted. Fig. 2d demonstrates that a Terahertz source typically requires that a Frequency Multiplier (M) be present to provide an extended frequency range output, (eg. from 300 GHz or below through at lest 1.4 THz).

Fig. 2e and 2f demonstrate basic components of Detectors, (eg. Golay cell (GC) and Bolometer (BOL)). A Golay cell basically comprises two Chambers (CH1) and (CH2). In use electromagnetic radiation (EM) enters one Chamber (CH1) and heats a gas therein, which expands. This causes the Diaphram (DIA) to change shape which causes a Probe Beam (PB) entered to the Second Chamber (CH2) to reflect along a different pathway which is then detected by a detector (not shown). Fig. 2f shows that a Bolometer (BOL) operates by directing a electromagnetic radiation to impinge on a material ($\Omega$) which changes resistance with its temperature. Also shown are a Voltage Source (V) and a Current Detector (I). In use a change in the current flow indicates that the electromagnetic radiation has heated the material ($\Omega$). Fig. 2g show a demonstrative detector of Terahertz frequencies comprises a P/N junction onto which electromagnetic radiation (EM) is impinged, and which produces a measurable voltage (V). Further, while many materials can be applied in solid state devices, a particularly relevant material for application in THz and IR frequency ranges is disclosed as being "Deuterated Triglycine Sulfate", which is typically referred to as (DTGS), optionally embedded in Poly-Vinylidene Fluroide (PVDF). Said material shows very high pyroelectric performance.

(Note, Fig. 2g should also be considered to present at least a portion of a solid state Source of Terahertz frequencies, wherein a voltage is applied, and electromagnetic radiation emission results. It is to be understood that Solid State Sources and Detectors for providing and detecting THz and/or IR frequency range electromagnetic radiation can be substituted for, or used in combination with any of the other types of Source and Detector types identified herein).

Figs. 2a - 2g are included to provide general insight to various sources and detectors, and it is again noted that the present invention comprises a backward wave oscillator and Golay cell.

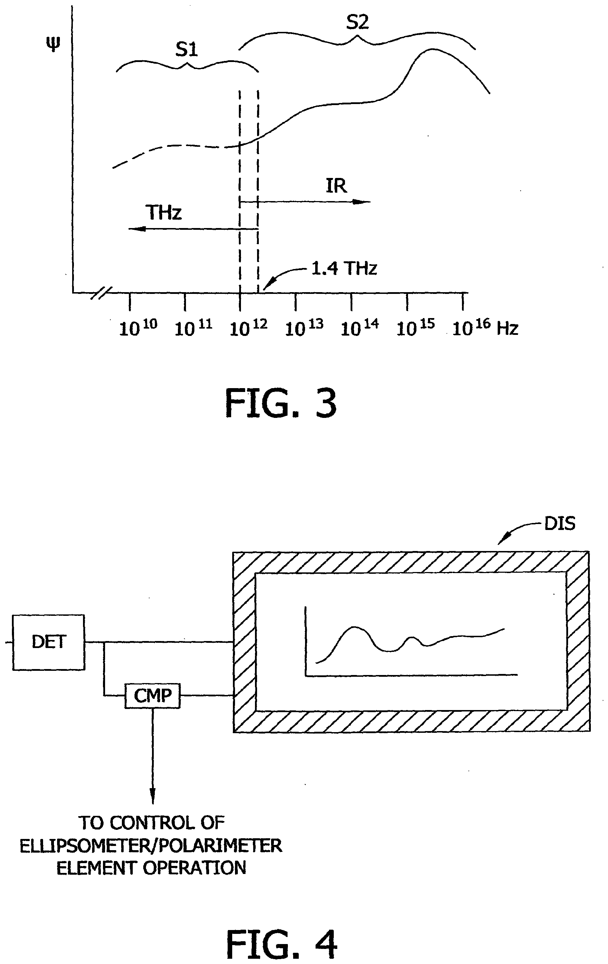

Fig. 3 shows that the present invention can be combined with sample investigation capability in the IR range to provide output from 300 GHz or below to about 1.4 THz, and from about 1.0 THz and higher frequencies). Further, it is indicated that below about 1.4 THz a first (S1) is used to provide the electromagnetic radiation, and above about 1.0 THz a second (S2) Source, (eg. a present invention system), is used to provide the electromagnetic radiation. Fig. 3 shows an overlap in the range of about 1.0 to about 1.4 THZ, and that a present invention system preferably provides the same results, (eg. ellipsometric PSI and/or DELTA), when Detector output is analyzed to provide, for instance, a Sample characterizing PSI ($\Psi$), (or DELTA ($\Delta$)) regardless of the Source applied. Fig. 3 should be viewed as demonstrating a concrete and tangible presentation of results which can be achieved by application of the Present Invention.

Fig. 4 demonstrates displaying data (DIS) provided by a Detector (DET) in Figs. 1a - 1a'), obtained by practice of the present invention using machine readable media of a computer (CMP), as well as indicates the Computer (CMP) can control Ellipsometer or Polarimeter elements operation.

Finally, it is specifically disclosed that a present invention system comprises a Computer System which controls element motion, (eg. stepwise or continuous rotation of a rotatable Polarizer (WGP1) and/or rotating Retarder (RRET) and/or rotating Polarizer (RWGP) and/or rotatable Polarizer (WGP2); operation of a Chopper (CH); positioning of a Sample (S); operation of the Source (BWO); and operation of Golay cell Detector (DET)). Further, a present invention system comprises the same or a different Computer System (CMP) which serves to analyze data provided by a Detector (DET) and Display said data or results of analysis thereof. That is, the present invention can be considered to be a Computer System (CMP) which comprises an Ellipsometer or Polarimeter, which Computer System (CMP) controls operation of elements of said Ellipsometer or Polarimeter to the end that Sample characterizing Data is developed, as well as analysis of said data performed and presentation of said data, or results of analysis thereof.

**Claims**

1. A method of determining physical and optical properties of samples using a terahertz frequency electromagnetic radiation, comprising the steps of:

   providing a terahertz ellipsometer or polarimeter system sequentially comprising:

   a source of Terahertz frequencies (BWO);
   a first rotatable polarizer that operates at THZ frequencies;
   a first rotating element (RE1);
   a stage (STG) for supporting a sample (S);
   a second rotating element (RE2)
   a second rotatable polarizer that operates at THZ frequencies;
   a detector (DET) of THZ frequencies;
   wherein one of the first (RE1) and second (RE2) rotating elements is a rotating polarizer and the other is a rotating retarder (RRET) comprising, in any functional order, a first reflective element (RP) which is a prism, and a second (RM1), third (RM2) and fourth (RM3) reflective elements,

   placing a sample (S) on said stage (STG);
   causing said source of Terahertz frequencies to direct a beam (BI) of terahertz frequency electromagnetic radiation of a fundamental frequency to pass through said first rotatable polarizer (WGP1), then through said first rotating element (RE1), then reflect from a sample (S) placed on said stage (STG), then pass through said second rotating element (RE2), then pass through said second rotatable polarizer (WGP2), and enter said detector (DET) of THZ frequencies as output beam (BO);
   obtaining sample describing data from said detector (DET).

2. A method as claimed in claim 1 wherein the first and second rotatable polarisers and the rotating polariser element (RE1; RE2) each comprise a wire grid.

3. A method as claimed in claims 1 or 2 wherein, in use, the electromagnetic beam reflects once from each of the first (RP), second (RM1), third (RM2) and fourth (RM3) reflective elements, and wherein the prism (RP) receives a beam through a first side thereof and exits a reflected beam through a third side thereof, said reflection being from a second side thereof oriented at prism forming angles to said first and third sides; said elements (RP) (RM1) (RM2) (RM3) being oriented with respect to one another such that the locus of the beam reflecting from the second side of said prism approaches said second reflective side thereof at an angle equal to or greater than that required to achieve total internal reflection within said prism (RP), and such that the locus of beam reflected from the fourth element in the sequence of elements is substantially collinear and without deviation or displacement from the locus of the beam received by the first element in said sequence of elements.

4. A method as in Claim 2 in which the detector is a Golay cell detector and the sample (S) is caused to be oriented in either:

   a substantially vertical plane while data is obtained from said Golay cell detector (DET); or,
   a substantially horizontal plane by application of a system comprising left and right vertical sequences of first (FLS/FRS), second (SLS/SRS) and third (TLS/TRS) elements, such that the terahertz frequency electromagnetic beam exiting said rotating polarizer comprising a wire grid (RWGP) reflects from the first left side element (FLS) to the second left side element (SLS), then to the third right side (RS) element, from which it is directed to reflect from a sample (S) placed on the stage (STG) in a substantially horizontal plane toward the third left side (TLS) element, which reflects said beam to the second right side element (SRS) toward said first right side element (FRS), from which said beam is directed into said rotating retarder (RRET).

5. A method as in Claim 2, wherein:

   the source of Terahertz frequencies is a backward wave oscillator (BWO); and
   the detector (DET) is a Golay cell detector,

which further comprises providing means for rotating, as a unit, said:

> stage (STG); rotating retarder (RRET),; second rotatable polarizer comprising a wire grid (WGP2); and Golay cell detector (DET);
> and/or as a unit said:

> > stage (STG) for supporting a sample (S); rotating wire grid polarizer (RWGP);; rotatable polarizer comprising a wire grid (WGP1); and backward wave oscillator (BWO);
> > about a vertical axis centred at a midpoint of said stage (STG) such that the angle of incidence ($\Theta$) at which said beam of terahertz frequency electromagnetic radiation approaching from said rotating polarizer comprising a wire grid (RWGP), and the angle of reflection ($\Theta$) of said beam from said sample (S) placed on said stage (STG) for supporting a sample, can be adjusted; and
> > prior to step D) causing rotation of the unit about said vertical midpoint axis of said stage.

6. A method as in Claim 1 or 2 wherein:

> the source of Terahertz frequencies is a backward wave oscillator (BWO); and
> the detector is a Golay cell detector,

the method further comprises providing a chopper (CHP), said chopper (CHP) being a rotating wheel with a plurality of openings therein through which the terahertz electromagnetic radiation beam can pass, said chopper (CHP) being placed the locus of the terahertz electromagnetic radiation beam at some point between said backward wave oscillator and said Golay cell detector, and during the step D) obtaining of data, causing said chopper to chop said terahertz frequency beam.

7. A method as in Claim 1 or 2 in which the rotating polarizer element (RWGP) and the rotating retarder element (RRET), are rotated at relative speeds with respect to one another that form a ratio in the range of 1 to 10 or in the range of 10 to 1 during the step d obtaining of data.

8. A method as in Claim 1 or 2, wherein:

> the source of Terahertz frequencies is a backward wave oscillator (BWO); and
> the detector is a Golay cell detector,

the method further comprises performing at least one selection from the group consisting of:

> storing at least some data provided by said Golay cell detector in machine readable media;

> > analyzing at least some of the data provided by said Golay cell detector and storing at least some of the results of said analysis in machine readable media;
> > displaying at least some data provided by said Golay cell detector by electronic and/or non-electronic means;
> > analyzing at least some of the data provided by said Golay cell detector and displaying at least some of the results of said analysis by electronic and/or non-electronic means;
> > causing at least some data provided by said Golay cell detector to produce a signal which is applied to provide a concrete and tangible result;
> > analyzing at least some of the data provided by said Golay cell detector and causing at least some thereof to produce a signal which is applied to provide a concrete and tangible result.

9. A method as in any of claims 1 to 8, wherein the prism is placed so that the beam encounters the prism before it encounters the second, third and fourth reflecting elements.

10. A method as in Claim 1, wherein the beam reflects from one surface of the prism only.

11. A terahertz ellipsometer or polarimeter system sequentially comprising:

> a source of Terahertz frequencies;
> a first rotatable polarizer that operates at THZ frequencies ;
> a stage (STG) for supporting a sample (S);

a second rotatable polarizer that operates at THZ frequencies;
a detector (DET) of THZ frequencies;

said terahertz ellipsometer or polarimeter system further comprising a first rotating element (RE1) and second rotating element (RE2) between said source and said a detector (DET) of THZ frequencies; wherein one thereof is a rotating polarizer and the other thereof is a rotating retarder (RRET) comprising, in any functional order, a first reflective element (RP) which is a prism, and a second (RM1), third (RM2) and fourth (RM3) reflective elements, such that in use said source of THZ frequencies directs a beam (BI) of terahertz frequency electromagnetic radiation of a fundamental frequency to pass through said first rotatable polarizer, reflect from a sample (S) placed on said stage (STG) for supporting a sample, then pass through said second rotatable polarizer, and as output beam (BO) enters said detector (DET) of terahertz frequencies as output beam (BO), said beam of terahertz frequency electromagnetic radiation also passing through said first (RE1) and second (RE2) rotating elements.

12. A terahertz ellipsometer or polarimeter system as in Claim 11, wherein said first rotating element (RE1) and second rotating element (RE2) are on the source and detector sides of said stage (STG) and sample, respectively, and wherein the first rotatable polarizer that operates at Terahertz frequencies comprises a wire grid (WGP1), and wherein the second rotatable polarizer that operates at Terahertz frequencies comprises a comprises a wire grid (WGP2), and wherein the rotating polariser element comprising a wire grid (RWGP); and wherein said source of Terahertz frequencies is a backward wave oscillator (BWO), and said detector (DET) of terahertz frequencies is a Golay cell;
such that in use said backward wave oscillator (BWO) directs a beam (BI) of terahertz frequency electromagnetic radiation of a fundamental frequency to pass through said first rotatable polarizer comprising a wire grid (WGP1), then through said first rotating element (RE1), then reflect from a sample (S) placed on said stage (STG) for supporting a sample, then pass through said second rotating element (RE2), then pass through said second rotatable polarizer comprising a wire grid (WGP2), and, as output beam (BO) enter said Golay cell detector (DET) as output beam (BO) .

13. A terahertz ellipsometer or polarimeter system as in Claim 12, wherein, in use, the electromagnetic beam reflects once from each of the first (RP), second (RM1), third (RM2) and fourth (RM3) reflective elements, and wherein the prism (RP) receives a beam through a first side thereof and exits a reflected beam through a third side thereof, said reflection being from a second side thereof oriented at prism forming angles to said first and third sides; said elements (RP) (RM1) (RM2) (RM3) being oriented with respect to one another such that the locus of the beam reflecting from the second side of said prism approaches said second reflective side thereof at an angle equal to or greater than that required to achieve total internal reflection within said prism (RP), and such that the locus of beam reflected from the fourth element in the sequence of elements is substantially collinear and without deviation or displacement from the locus of the beam received by the first element in said sequence of elements.

14. A terahertz ellipsometer or polarimeter as in Claim 12 or 13 that further comprises a chopper (CHP) between said backward wave oscillator (BWO) and said Golay cell detector (DET).

15. A terahertz ellipsometer or polarimeter system as in Claim 12 or 13 which further comprises means for rotating, as a unit, said:

stage (STG) for supporting a sample (S), Golay cell detector (DET) and all elements there inbetween;
and/or as a unit said:

stage (STG) for supporting a sample (S), backward wave oscillator (BWO) and all elements thereinbetween; about a vertical axis centred at a midpoint of said stage (STG) for supporting a sample (S) such that the angle of incidence ($\Theta$) at which said beam of terahertz frequency electromagnetic radiation approaching, and the angle of reflection ($\Theta$) of said beam from said sample (S) placed on said stage (STG) for supporting a sample, can be adjusted.

16. A terahertz ellipsometer or polarimeter system as in any of Claims 11 to 13, in which the stage (STG) for supporting a sample (S) is oriented to support a sample in a:

substantially vertical plane; or,
substantially horizontal plane.

17. A terahertz ellipsometer or polarimeter system as in Claim 12 or 13, in which the stage (STG) for supporting a sample is oriented to support a sample (S) in a substantially horizontal plane and in which the beam exiting said first rotating element (RE1) is directed thereto via left and right vertical sequences, each of first (FLS/FRS), second (SLS/SRS) and third (TLS/TRS) elements, such that the terahertz frequency electromagnetic beam exiting said first rotating element reflects from the first left side element (FLS) to the second left side element (SLS), then to the third right side element (TRS), from which it is directed to reflect from a sample (S) placed on the stage (STG) in a substantially horizontal plane toward the third left side element (TLS), which reflects said beam to the second right side element (SRS) toward said first right side element (FRS), from which said beam is directed into said second rotating element (RE2),

18. A terahertz ellipsometer or polarimeter system as in Claim 13, in which the rotating polarizer (RWGP) comprising a wire grid is selected from the group consisting of:

a dual polarizing component system comprising non-Brewster angle (NBR) and Brewster (BR) Angle components, wherein a beam of electromagnetic radiation that passes through said non-Brewster angle (NBR) component, that comprises a wire grid, then reflects from additional reflective means (M1) and (M2), then from (BR), and continues as a polarized beam); and

a dual tipped wire grid polarizer system comprising first (WG1) and second (WG2) wire grid polarizers which have fast axes of polarization oriented with their fast axes parallel to one another, each thereof having first and second essentially parallel surfaces, such that essentially parallel sides of (WG1) are tipped with respect to the essentially parallel sides of (WG2), wherein a beam entering one of said first and second wire grid polarizers exits the second thereof in a polarized state, with unwanted reflections (R1) and (R2) being diverted away.

19. A terahertz ellipsometer or polarimeter system as in any of Claims 11 to 13, in which the first and second rotating elements are rotated at relative speeds with respect to one another that form a ratio in the range of 1 to 10 or in the range of 10 to 1.

20. A terehartz ellipsometer or polarimeter system as in any of Claims 11 to 19, wherein the prism is placed so that, in use, the beam encounters the prism before it encounters the first, second and third reflective elements.

21. A terahertz ellipsometer or polarimeter system as in Claim 11, wherein, in use, the beam reflects from one surface of the prism only.

**Patentansprüche**

1. Verfahren zum Bestimmen physikalischer und optischer Eigenschaften von Proben unter Verwendung einer elektromagnetischen Strahlung im Terahertz-Bereich, das die folgenden Schritte umfasst:

Bereitstellen eines Terahertz-Ellipsometer- oder Polarimetersystems, das nacheinander Folgendes umfasst:

eine Terahertz-Frequenzquelle (BWO);
einen ersten bei THZ-Frequenzen arbeitenden drehbaren Polarisator;
ein erstes rotierendes Element (RE1);
eine Plattform (STG) zum Aufnehmen einer Probe (S);
ein zweites rotierendes Element (RE2)
einen zweiten drehbaren bei THZ-Frequenzen arbeitenden Polarisator;
einen Detektor (DET) für THZ-Frequenzen;
wobei eines der ersten (RE1) und zweiten (RE2) rotierenden Elemente ein rotierender Polarisator und das andere ein rotierender Retarder (RRET) ist, die in beliebiger funktioneller Reihenfolge ein erstes reflektierendes Element (RP), das ein Prisma ist, und ein zweites (RM1), drittes (RM2) und viertes (RM3) reflektierendes Element umfassen,

Platzieren einer Probe (S) auf der Plattform (STG);
Veranlassen, dass die Terahertz-Frequenzquelle einen Strahl (BI) von elektromagnetischer Strahlung im Terahertz-Bereich einer Grundfrequenz so richtet, dass er durch den ersten drehbaren Polarisator (WGP1), dann durch das erste rotierende Element (RE1) hindurchgeht, dann von einer auf der Plattform (STG) angeordneten Probe (S) reflektiert wird, dann durch das zweite rotierende Element (RE2) hindurchgeht, dann durch den zweiten drehbaren Polarisator (WGP2) hindurchgeht und als Ausgangsstrahl (BO) in den Detektor (DET) für THZ-Frequenzen eintritt;
Erhalten von die Probe beschreibenden Daten aus dem Detektor (DET).

2. Verfahren nach Anspruch 1, wobei der erste und zweite drehbare Polarisator und das drehbare Polarisatorelement (RE1; RE2) jeweils ein Drahtgitter umfassen.

3. Verfahren nach Anspruch 1 oder 2, wobei während dessen Verwendung der elektromagnetische Strahl von jedem der ersten (RP), zweiten (RM1), dritten (RM2) und vierten (RM3) reflektierenden Elemente einmal reflektiert wird, und wobei das Prisma (RP) einen Strahl durch eine erste Seite davon empfängt und ein reflektierter Strahl durch eine dritte Seite davon austritt, wobei die Reflexion von einer zweiten Seite davon zu einem Prisma ausgerichtet ist, das Winkel zu den ersten und dritten Seiten bildet; wobei die Elemente (RP) (RM1) (RM2) (RM3) in Bezug zueinander so ausgerichtet sind, dass der geometrische Ort des von der zweiten Seite des Prismas reflektierenden Strahls sich der zweiten reflektierenden Seite des Prismas unter einem Winkel nähert, der gleich oder größer ist als der, der erforderlich ist, um eine innere Totalreflexion innerhalb des Prismas (RP) zu erreichen, und so, dass der geometrische Ort des vom vierten Element in der Elementfolge reflektierten Strahls im Wesentlichen kollinear und ohne Abweichung oder Verschiebung vom geometrischen Ort des vom ersten Element in der genannten Elementfolge empfangenen Strahls ist.

4. Verfahren nach Anspruch 2, bei dem der Detektor ein Golay-Zell-Detektor ist und die Probe (S) veranlasst wird, entweder:

in einer im Wesentlichen vertikalen Ebene ausgerichtet zu sein, während Daten von dem Golay-Zell-Detektor (DET) erhalten werden; oder,
in einer im Wesentlichen horizontalen Ebene durch Anwendung eines Systems ausgerichtet zu sein, das linke und rechte vertikale Sequenzen von ersten (FLS/FRS), zweiten (SLS/SRS) und dritten (TLS/TRS) Elementen umfasst, sodass der elektromagnetische Strahl mit Terahertz-Frequenz, der aus dem rotierenden, ein Drahtgitter (RWGP) umfassenden Polarisator austritt, von dem ersten linken Element (FLS) zum zweiten linken Element (SLS) und dann zum dritten rechten Element (RS) reflektiert wird, von dem aus es so ausgerichtet ist, dass es von einer auf der Plattform (STG) in einer im Wesentlichen horizontalen Ebene angeordneten Probe (S) zum dritten linken Element (TLS) reflektiert wird, das den Strahl zum zweiten rechten Element (SRS) zum ersten rechten Element (FRS) reflektiert, von dem der Strahl in den rotierenden Retarder (RRET) gerichtet wird.

5. Verfahren nach Anspruch 2, wobei:

die Terahertz-Frequenzquelle ein Rückwärtswellen-Oszillator (BWO) ist; und
der Detektor (DET) ein Golay-Zell-Detektor ist,

das weiter Bereitstellen von Mitteln zum Drehen als Einheit der/des:

Plattform (STG); rotierenden Retarders (RRET); zweiten drehbaren Polarisator mit Drahtgitter (WGP2); und Golay-Zelldetektors (DET);
und/oder als eine Einheit der/des:

Plattform (STG) zum Aufnehmen einer Probe (S); rotierenden Drahtgitter-Polarisators (RWGP); drehbaren Polarisators mit Drahtgitter (WGP 1); und Rückwärtswellen-Oszillators (BWO);
um eine vertikale Achse umfasst, die auf einen Mittelpunkt der Plattform (STG) zentriert ist, sodass der Einfallswinkel ($\Theta$), unter dem sich der Strahl der elektromagnetischen Strahlung im Terahertz-Bereich, der sich von dem rotierenden, ein Drahtgitter (RWGP) umfassenden Polarisator nähert, und der Reflexionswinkel ($\Theta$) des Strahls von der Probe (S), die auf der Plattform (STG) zur Aufnahme einer Probe angeordnet ist, eingestellt werden kann; und
vor Schritt D) Veranlassen einer Drehung der Einheit um die vertikale Mittelachse der Plattform.

6. Verfahren nach Anspruch 1 oder 2, wobei:

die Quelle der Terahertz-Frequenz ein Rückwärtswellen-Oszillator (BWO) ist; und
der Detektor ein Golay-Zell-Detektor ist,

das Verfahren weiter das Bereitstellen eines Zerhackers (CHP) umfasst, wobei der Zerhacker (CHP) ein rotierendes Rad mit einer Vielzahl von Öffnungen darin ist, durch die der Terahertz-Strahl der elektromagnetischen Terahertz-Strahlung hindurchtreten kann, wobei der Zerhacker (CHP) am geometrischen Ort des Terahertz-Strahls der elektromagnetischen Strahlung an einem Punkt zwischen dem Rückwärtswellen-Oszillator und dem Golay-Zell-Detektor angeordnet ist, und während des Datenerhalt-Schritts D) den Zerhacker veranlasst, den Terahertz-Frequenzstrahl zu zerhacken.

7. Verfahren nach Anspruch 1 oder 2, bei dem das rotierende Polarisatorelement (RWGP) und das rotierende Retarderelement (RRET) mit relativen Geschwindigkeiten zueinander gedreht werden, die während des Datenerhalt-Schritts d ein Verhältnis im Bereich von 1 bis 10 oder im Bereich von 10 bis 1 bilden.

8. Verfahren nach Anspruch 1 oder 2, wobei:

   die Terahertz-Frequenzquelle ein Rückwärtswellen-Oszillator (BWO) ist; und
   der Detektor ein Golay-Zell-Detektor ist,

   das Verfahren weiter die Durchführung mindestens einer Auswahl aus der Gruppe umfasst, die Folgendem besteht:

   Speichern zumindest einiger von dem Golay-Zell-Detektor gelieferten Daten in maschinenlesbaren Medien;
   Analysieren zumindest einiger der von dem Golay-Zell-Detektor gelieferten Daten und Speichern zumindest einiger der Ergebnisse der Analyse in maschinenlesbaren Medien;
   Anzeigen zumindest einiger von dem Golay-Zell-Detektor auf elektronischem und/oder nichtelektronischem Wege bereitgestellten Daten;
   Analysieren mindestens einiger der von dem Golay-Zell-Detektor gelieferten Daten und Anzeigen mindestens einiger der Ergebnisse dieser Analyse auf elektronischem und/oder nichtelektronischem Wege;
   Veranlassen, dass zumindest einige von dem Golay-Zell-Detektor gelieferten Daten ein Signal erzeugen, das zur Lieferung eines konkreten und greifbaren Ergebnisses angewandt wird;
   Analysieren zumindest einiger der von dem Golay-Zell-Detektor gelieferten Daten, und Veranlassen zumindest einiger von diesen, ein Signal zu erzeugen, das zur Lieferung eines konkreten und greifbaren Ergebnisses angewandt wird.

9. Verfahren nach einem der Ansprüche 1 bis 8, wobei das Prisma so angeordnet ist, dass der Strahl auf das Prisma trifft, bevor er auf das zweite, dritte und vierte reflektierende Element trifft.

10. Verfahren nach Anspruch 1, wobei der Strahl nur von einer Oberfläche des Prismas reflektiert wird.

11. Terahertz-Ellipsometer- oder Polarimetersystem, das nacheinander Folgendes umfasst:

    eine Terahertz-Frequenzquelle;
    einen ersten drehbaren bei THZ-Frequenzen arbeitenden Polarisator;
    eine Plattform (STG) zum Aufnehmen einer Probe (S);
    einen zweiten drehbaren bei THZ-Frequenzen arbeitenden Polarisator;
    einen Detektor (DET) für THZ-Frequenzen;

    wobei das Terahertz-Ellipsometer- oder Polarimetersystem weiter ein erstes rotierendes Element (RE1) und ein zweites rotierendes Element (RE2) zwischen der Quelle und dem Detektor (DET) für THZ-Frequenzen umfasst; wobei einer davon ein rotierender Polarisator und der andere davon ein rotierender Retarder (RRET) ist, der in beliebiger funktionaler Reihenfolge ein erstes reflektierendes Element (RP), das ein Prisma ist, und ein zweites (RM1), drittes (RM2) und viertes (RM3) reflektierendes Element umfasst, sodass bei der Verwendung die THZ-Frequenzquelle einen Strahl (BI) einer elektromagnetischen Strahlung im Terahertz-Bereich einer Grundfrequenz so richtet, dass er durch den ersten drehbaren Polarisator hindurchgeht, von einer Probe (S) reflektiert wird, die auf der Plattform (STG) zum Aufnehmen einer Probe angeordnet ist, dann durch den zweiten drehbaren Polarisator hindurchgeht und als Ausgangsstrahl (BO) in den Detektor (DET) für Terahertz-Frequenzen eintritt, wobei der Strahl der elektromagnetischen Strahlung im Terahertz-Bereich auch durch das erste (RE1) und das zweite (RE2) rotierende Element hindurchgeht.

12. Terahertz-Ellipsometer- oder -Polarimetersystem nach Anspruch 11, wobei sich das erste rotierende Element (RE1) und das zweite rotierende Element (RE2) auf der Quellen- und Detektorseite der Plattform (STG) bzw. der Probe befinden, und wobei der erste drehbare bei Terahertz-Frequenzen arbeitende Polarisator ein Drahtgitter (WGPI) umfasst, und wobei der zweite drehbare bei Terahertz-Frequenzen arbeitende Polarisator ein Drahtgitter (WGP2) umfasst, und wobei das rotierende Polarisatorelement ein Drahtgitter (RWGP) umfasst; und wobei die Terahertz-Frequenzquelle ein Rückwärtswellen-Oszillator (BWO) ist und der Detektor (DET) für Terahertz-Frequenzen eine Golay-Zelle ist;

sodass der Rückwärtswellen-Oszillator (BWO) bei der Verwendung einen Strahl (BI) einer elektromagnetischen Strahlung im Terahertz-Bereich einer Grundfrequenz so richtet, dass er durch den ersten drehbaren, ein Drahtgitter (WGP1) umfassenden Polarisator hindurchgeht, dann durch das erste rotierende Element (RE1) hindurchgeht, dann von einer Probe (S), die auf der Plattform (STG) zum Aufnehmen einer Probe angeordnet ist, reflektiert wird, dann durch das zweite rotierende Element (RE2) hindurchgeht, dann durch den zweiten drehbaren, ein Drahtgitter (WGP2) umfassenden Polarisator hindurchgeht und als Ausgangsstrahl (BO) in den Golay-Zell-Detektor (DET) eintritt.

13. Terahertz-Ellipsometer- oder Polarimeter-System nach Anspruch 12, wobei während dessen Verwendung der elektromagnetische Strahl von jedem der ersten (RP), zweiten (RM1), dritten (RM2) und vierten (RM3) reflektierenden Elemente einmal reflektiert wird, und wobei das Prisma (RP) einen Strahl durch eine erste Seite davon empfängt und ein reflektierter Strahl durch eine dritte Seite davon austritt, wobei die Reflexion von einer zweiten Seite zu einem Prisma ausgerichtet ist, das Winkel zu den ersten und dritten Seiten bildet; wobei die Elemente (RP) (RM1) (RM2) (RM3) in Bezug zueinander so ausgerichtet sind, dass der geometrische Ort des von der zweiten Seite des Prismas reflektierenden Strahls sich der zweiten reflektierenden Seite des Prismas unter einem Winkel nähert, der gleich oder größer ist als der, der erforderlich ist, um eine innere Totalreflexion innerhalb des Prismas (RP) zu erreichen, und so, dass der geometrische Ort des vom vierten Element in der Elementfolge reflektierten Strahls im Wesentlichen kollinear und ohne Abweichung oder Verschiebung vom geometrischen Ort des vom ersten Element in der genannten Elementfolge empfangenen Strahls ist.

14. Terahertz-Ellipsometer oder -Polarimeter nach Anspruch 12 oder 13, das weiter einen Zerhacker (CHP) zwischen dem Rückwärtswellen-Oszillator (BWO) und dem Golay-Zell-Detektor (DET) aufweist.

15. Terahertz-Ellipsometer- oder -Polarimetersystem nach Anspruch 12 oder 13, das weiter Bereitstellen von Mitteln zum Drehen als Einheit der/des:

Plattform (STG) zum Aufnehmen einer Probe (S), Golay-Zell-Detektors (DET) und aller dazwischen liegenden Elemente;
und/oder als eine Einheit der/des:

Plattform (STG) zum Aufnehmen einer Probe (S), Rückwärtswellen-Oszillator (BWO) und aller Elemente dazwischen;
um eine vertikale Achse umfasst, die auf einen Mittelpunkt der Plattform (STG) zum Aufnehmen einer Probe (S) zentriert ist, sodass der Einfallswinkel ($\Theta$), unter dem sich der Strahl der elektromagnetischen Strahlung im Terahertz-Bereich annähert, und der Reflexionswinkel ($\Theta$) des Strahls von der Probe (S), die auf der Plattform (STG) zur Aufnahme einer Probe angeordnet ist, eingestellt werden kann.

16. Terahertz-Ellipsometer- oder Polarimetersystem nach einem der Ansprüche 11 bis 13, bei dem die Plattform (STG) zum Aufnehmen einer Probe (S) so ausgerichtet ist, dass sie eine Probe:

in einer im Wesentlichen vertikalen Ebene aufnimmt; oder
in einer im Wesentlichen horizontalen Ebene aufnimmt.

17. Terahertz-Ellipsometer- oder Polarimetersystem nach Anspruch 12 oder 13, bei dem die Plattform (STG) zum Aufnehmen einer Probe so ausgerichtet ist, dass sie eine Probe (S) in einer im Wesentlichen horizontalen Ebene trägt, und bei dem der aus dem ersten rotierenden Element (RE1) austretende Strahl über linke und rechte vertikale Sequenzen jeweils auf ein erstes (FLS/FRS), ein zweites (SLS/SRS) und ein drittes (TLS/TRS) Element gerichtet ist, sodass der elektromagnetische Strahl mit Terahertz-Frequenz, der aus dem ersten rotierenden Element austritt, von dem ersten linken Element (FLS) zu dem zweiten linken Element (SLS) und dann zu dem dritten rechten Element (TRS) reflektiert wird, von dem er von einer Probe (S), die auf der Plattform (STG) in einer im Wesentlichen horizontalen Ebene angeordnet ist, zu dem dritten linken Element (TLS) reflektiert wird, das den Strahl zu dem zweiten rechten Element (SRS) zu dem ersten rechten Element (FRS) reflektiert, von dem der Strahl in das zweite rotierende Element (RE2) gerichtet wird.

**18.** Terahertz-Ellipsometer- oder Polarimetersystem nach Anspruch 13, bei dem der rotierende, ein Drahtgitter umfassende Polarisator (RWGP) aus einer Gruppe ausgewählt ist, die aus Folgendem besteht:

einem System mit zwei polarisierenden Komponenten, das Nicht-Brewster-Winkel-(NBR) und Brewster-Winkel-(BR) Komponenten umfasst, wobei ein Strahl elektromagnetischer Strahlung, der durch die ein Drahtgitter umfassende Nicht-Brewster-Winkel- (NBR) Komponente hindurchgeht, dann von zusätzlichen reflektierenden Mitteln (M1) und (M2) und dann von (BR) reflektiert wird und sich als polarisierter Strahl fortsetzt; und
einem doppelt gekippten Drahtgitter-Polarisatorsystem, umfassend einen ersten (WG1) und einen zweiten (WG2) Drahtgitter-Polarisator, die schnelle Polarisationsachsen aufweisen, die so ausgerichtet sind, dass ihre schnellen Achsen parallel zueinander sind, wobei jede davon eine erste und eine zweite im Wesentlichen parallele Oberfläche aufweist, sodass im Wesentlichen parallele Seiten von (WG1) in Bezug auf die im Wesentlichen parallelen Seiten von (WG2) gekippt sind, wobei ein Strahl, der in einen der ersten und zweiten Drahtgitterpolarisator eintritt, den zweiten davon in einem polarisierten Zustand verlässt, wobei unerwünschte Reflexionen (R1) und (R2) abgelenkt werden.

**19.** Terahertz-Ellipsometer- oder Polarimetersystem nach einem der Ansprüche 11 bis 13, bei dem das erste und das zweite rotierende Element mit relativen Geschwindigkeiten zueinander gedreht werden, die ein Verhältnis im Bereich von 1 bis 10 oder im Bereich von 10 bis 1 bilden.

**20.** Terahertz-Ellipsometer- oder Polarimetersystem wie in einem der Ansprüche 11 bis 19, wobei das Prisma so angeordnet ist, dass der Strahl während der Verwendung auf das Prisma trifft, bevor er auf das erste, zweite und dritte reflektierende Element trifft.

**21.** Terahertz-Ellipsometer- oder Polarimetersystem nach Anspruch 11, wobei der Strahl während der Verwendung nur von einer Oberfläche des Prismas reflektiert wird.

**Revendications**

**1.** Procédé destiné à déterminer les propriétés physiques et optiques d'échantillons à l'aide d'un rayonnement électromagnétique de fréquences térahertz consistant à :

fournir un système ellipsomètre ou polarimètre térahertz comprenant de manière séquentielle :

une source de fréquences térahertz (BWO) ;
un premier polariseur rotatif qui fonctionne à des fréquences THZ ;
un premier élément rotatif (RE1) ;
un étage (STG) destiné à supporter un échantillon (S) ;
un second élément rotatif (RE2) ;
un second polariseur rotatif qui fonctionne à des fréquences THZ ;
un détecteur (DET) de fréquences THZ ;
dans lequel l'un des premier (RE1) et second (RE2) éléments rotatifs est un polariseur rotatif et l'autre est un retardateur rotatif (RRET) comprenant, dans tout ordre fonctionnel, un premier élément réfléchissant (RP) qui est un prisme et un deuxième (RM1), troisième (RM2) et quatrième (RM3) éléments réfléchissants,

placer un échantillon (S) sur ledit étage (STG) ;
causer ladite source de fréquences térahertz à diriger un faisceau (BI) de rayonnement électromagnétique de fréquence térahertz d'une fréquence fondamentale à passer à travers ledit premier polariseur rotatif (WGP1), puis à passer à travers ledit premier élément rotatif (RE1), puis à se réfléchir sur un échantillon (S) placé sur ledit étage (STG), puis à passer à travers ledit second élément rotatif (RE2), puis à passer à travers ledit second polariseur rotatif (WGP2) et à pénétrer dans ledit détecteur (DET) de fréquences THZ en tant que faisceau de sortie (BO) ;
obtenir des données de description d'échantillon dudit détecteur (DET).

**2.** Procédé selon la revendication 1 dans lequel les premier et second polariseurs rotatifs et l'élément polariseur rotatif (RE1 ; RE2) comprennent chacun une grille de fils.

**3.** Procédé selon la revendication 1 ou 2 dans lequel, en utilisation, le faisceau électromagnétique est réfléchi une fois sur chacun des premier (RP), deuxième (RM1), troisième (RM2) et quatrième (RM3) éléments réfléchissants, et dans lequel le prisme (RP) reçoit un faisceau à travers un premier côté de celui-ci et ressort sous forme d'un faisceau réfléchi à travers un troisième côté de celui-ci, ladite réflexion provenant d'un deuxième côté de celui-ci, orientée au niveau d'un prisme en formant des angles par rapport auxdits premier et troisième côtés ; lesdits éléments (RP) (RM1) (RM2) (RM3) étant orientés les uns par rapport aux autres de sorte que le lieu du faisceau se réfléchissant à partir du deuxième côté dudit prisme s'approche dudit deuxième côté réfléchissant de celui-ci sous un angle supérieur ou égal à celui requis pour atteindre une réflexion interne totale à l'intérieur dudit prisme (RP), et de sorte que le lieu du faisceau réfléchi à partir du quatrième élément dans la séquence des éléments soit sensiblement colinéaire et sans déviation ou déplacement du lieu du faisceau reçu par le premier élément dans ladite séquence d'éléments.

4. Procédé selon la revendication 2 dans lequel le détecteur est une cellule de Golay et l'échantillon (S) est amené à être orienté soit :

dans un plan sensiblement vertical alors que les données sont obtenues dudit détecteur Golay (DET) ; soit dans un plan sensiblement horizontal par l'application d'un système comprenant des séquences verticales gauche et droite des premier (FLS/FRS) ; deuxième (SLS/SRS) et troisième (TLS/TRS) éléments, de sorte que le faisceau électromagnétique de fréquences térahertz quittant ledit polariseur rotatif comprenant un grille de fils (RWGP) se réfléchisse sur le premier élément du côté gauche (FLS) vers le deuxième élément du côté gauche (SLS), puis vers le troisième élément du côté droit (RS), à partir duquel il est dirigé pour se réfléchir sur un échantillon (S) placé sur l'étage (STG) dans un plan sensiblement horizontal vers le troisième élément du côté gauche (TLS), qui réfléchit ledit faisceau vers le deuxième élément du côté droit (SRS) vers ledit premier élément du côté droit (FRS), à partir duquel ledit faisceau est dirigé dans ledit retardateur rotatif (RRET).

5. Procédé selon la revendication 2, dans lequel

la source de fréquences térahertz est un oscillateur à ondes inverses (BWO) et le détecteur (DET) est un détecteur Golay,

qui consiste en outre à fournir des moyens pour pivoter, en tant qu'une unité, lesdits :

étage (STG) ; retardateur rotatif (RRET) ; second polariseur rotatif comprenant une grille de fils (WGP2) ; et détecteur Golay (DET) ;
et/ou en tant qu'une unité lesdits :

étage (STG) destiné à supporter un échantillon (S) ; polariseur rotatif à grille de fils (RWGP) ; polariseur rotatif comprenant une grille de fils (WGP1) ; et oscillateur à ondes inverses (BWO) ; autour d'un axe vertical centré au niveau d'un point médian dudit étage (STG) de sorte que l'angle d'incidence ($\theta$) sous lequel ledit faisceau de rayonnement électromagnétique de fréquences térahertz s'approchant dudit polariseur rotatif comprenant une grille de fils (RWGP), et l'angle de réflexion ($\theta$) dudit faisceau provenant dudit échantillon (S) placé sur ledit étage (STG) destiné à supporter un échantillon, peuvent être ajustés ; et avant l'étape D) causant la rotation de l'unité autour dudit axe médian vertical dudit étage.

6. Procédé selon la revendication 1 ou 2 dans lequel :

la source de fréquences térahertz est un oscillateur à ondes inverses (BWO) ; et le détecteur est une cellule de Golay,

le procédé consistant en outre à fournir un hacheur (CHP), ledit hacheur (CHP) étant une roue en rotation comprenant une pluralité d'ouvertures à travers desquelles le faisceau de rayonnement électromagnétique de fréquences térahertz peut passer, ledit hacheur (CHP) étant placé au niveau du lieu du faisceau de rayonnement électromagnétique de fréquences térahertz à un certain point entre ledit oscillateur à ondes inverses et ledit détecteur Golay, et, durant l'étape D) d'obtention des données, à causer ledit hacheur à hacher ledit faisceau de fréquences térahertz.

7. Procédé selon la revendication 1 ou 2 dans lequel l'élément polariseur rotatif (RWGP) et l'élément retardateur rotatif (RRET) sont en rotation à des vitesses relatives l'un par rapport à l'autre qui forment un rapport dans la gamme de 1 à 10 ou dans la gamme de 10 à 1 pendant l'étape d d'obtention des données.

**8.** Procédé selon la revendication 1 ou 2 dans lequel :

la source de fréquences térahertz est un oscillateur à ondes inverses (BWO) ; et
le détecteur est un détecteur Golay,

le procédé comprenant en outre d'exécuter au moins une sélection à partir du groupe consistant à :

stocker au moins quelques données fournies par ledit détecteur Golay dans des supports lisibles par machine ;
analyser au moins quelques-unes des données fournies par ledit détecteur Golay et à stocker au moins quelques-uns des résultats de ladite analyse dans des supports lisibles par machine ;
afficher au moins quelques données fournies par ledit détecteur Golay par des moyens électroniques et/ou non-électroniques ;
analyser au moins quelques-unes des données fournies par ledit détecteur Golay et à afficher au moins quelques-uns des résultats de ladite analyse par des moyens électroniques et/ou non-électroniques ;
causer au moins quelques données fournies par ledit détecteur Golay à produire un signal qui est appliqué pour donner un résultat concret et tangible ;
analyser au moins quelques-unes des données fournies par ledit détecteur Golay et à causer au moins certaines de celles-ci à produire un signal qui est appliqué pour donner un résultat concret et tangible.

**9.** Procédé selon l'une quelconque des revendications 1 à 8 dans lequel le prisme est placé afin que le faisceau rencontre le prisme avant de rencontrer les deuxième, troisième et quatrième éléments réfléchissants.

**10.** Procédé selon la revendication 1 dans lequel le faisceau est réfléchi sur une surface du prisme uniquement.

**11.** Système ellipsomètre ou polarimètre térahertz comprenant séquentiellement :

une source de fréquences térahertz ;
un premier polariseur rotatif qui fonctionne à des fréquences THZ ;
un étage (STG) destiné à supporter un échantillon (S) ;
un second polariseur rotatif qui fonctionne à des fréquences THZ ;
un détecteur (DET) de fréquences THZ ;

ledit système ellipsomètre ou polarimètre térahertz comprenant en outre un premier élément rotatif (RE1) et un second élément rotatif (RE2) entre ladite source et ledit détecteur (DET) de fréquences THZ ; dans lequel l'un de ces éléments est un polariseur rotatif et l'autre est un retardateur rotatif (RRET) comprenant, dans tout ordre fonctionnel, un premier élément réfléchissant (RP) qui est un prisme et un deuxième (RM1), troisième (RM2) et quatrième (RM3) éléments réfléchissants,
de sorte qu'en utilisation ladite source de fréquences THZ dirige un faisceau (BI) de rayonnement électromagnétique de fréquences térahertz d'une fréquence fondamentale à passer à travers ledit premier polariseur rotatif, à se réfléchir à partir d'un échantillon (S) placé sur ledit étage (STG) destiné à supporter un échantillon, puis à passer à travers ledit second polariseur rotatif, et, en tant que faisceau de sortie (BO), à pénétrer dans ledit détecteur (DET) de fréquences térahertz en tant que faisceau de sortie (BO), ledit faisceau de rayonnement électromagnétique de fréquences térahertz passe également à travers ledit premier (RE1) et second (RE2) éléments rotatifs.

**12.** Système ellipsomètre ou polarimètre térahertz selon la revendication 11, dans lequel ledit premier élément rotatif (RE1) et ledit second élément rotatif (RE2) se trouvent sur la source et les côtés du détecteur desdits étage (STG) et échantillon, respectivement, et dans lequel le premier polariseur rotatif qui fonctionne à des fréquences térahertz comprend une grille de fils (WGP1) et dans lequel le second polariseur rotatif qui fonctionne à des fréquences térahertz comprend une grille de fils (WGP2), et dans lequel l'élément polariseur rotatif comprenant un grille de fils (RWGP) ; et dans lequel ladite source de fréquences térahertz est un oscillateur à ondes inverses (BWO) ; et ledit détecteur de fréquences térahertz est une cellule de Golay ;
de sorte qu'en utilisation ledit oscillateur à ondes inverses (BWO) dirige un faisceau (BI) de rayonnement électromagnétique à fréquences térahertz d'une fréquence fondamentale à passer à travers ledit premier polariseur rotatif comprenant une grille de fils (WGP1), puis à passer à travers ledit premier élément rotatif (RE1), puis à se réfléchir sur un échantillon (S) placé sur ledit étage (STG) destiné à supporter un échantillon, puis à passer à travers ledit second polariseur rotatif (RE2), puis à passer à travers ledit second polariseur rotatif comprenant une grille de fils (WGP2), et, en tant que faisceau de sortie (BO), à pénétrer dans ledit détecteur Golay (DET) en tant que faisceau de sortie (BO).

**13.** Système ellipsomètre ou polarimètre térahertz selon la revendication 12, dans lequel, en utilisation, le faisceau électromagnétique est réfléchi une fois sur chacun des premier (RP), deuxième (RM21), troisième (RM2) et quatrième (RM3) éléments réfléchissants, et dans lequel le prisme (RP) reçoit un faisceau à travers un premier côté de celui-ci et quitte sous forme d'un faisceau réfléchi à travers un troisième côté de celui-ci, ladite réflexion provenant d'un deuxième côté de celui-ci orienté au niveau d'un prisme formant des angles par rapport auxdits premier et troisième côtés ; lesdits éléments (RP) (RM1) (RM2) (RM3) étant orientés les uns par rapport aux autres de sorte que le lieu du faisceau se réfléchissant à partir du deuxième côté dudit prisme s'approche dudit deuxième côté réfléchissant de celui-ci sous un angle supérieur ou égal à celui requis pour atteindre un réflexion interne totale à l'intérieur dudit prisme (RP), et de sorte que le lieu du faisceau réfléchi à partir du quatrième élément dans la séquence des éléments est sensiblement colinéaire et sans déviation ou déplacement depuis le lieu du faisceau reçu par le premier éléments dans ladite séquence d'éléments.

**14.** Système ellipsomètre ou polarimètre térahertz selon la revendication 12 ou 13 qui comprend en outre un hacheur (CHP) entre ledit oscillateur à ondes inverses et ledit détecteur Golay (DET).

**15.** Système ellipsomètre ou polarimètre térahertz selon la revendication 12 ou 13 qui comprend en outre des moyens pour faire tourner, en tant qu'une unité, lesdits :

étage (STG) destiné à supporter un échantillon (S) ; détecteur Golay (DET) et tous les éléments qui y sont intercalés ;
et/ou en tant qu'une unité lesdits :

étage (STG) destiné à supporter un échantillon (S) ; oscillateur à ondes inverses (BWO) et tous les éléments qui y sont intercalés ;
autour d'un axe vertical centré au niveau d'un point médian dudit étage (STG) de sorte que l'angle d'incidence (θ) sous lequel ledit faisceau de rayonnement électromagnétique de fréquences térahertz s'approche, et l'angle de réflexion (θ) dudit faisceau provenant dudit échantillon (S) placé sur ledit étage (STG) destiné à supporter un échantillon, peuvent être ajustés.

**16.** Système ellipsomètre ou polarimètre térahertz selon l'une quelconque des revendications 11 à 13, dans lequel l'étage (STG) destiné à supporter un échantillon (S) est orienté pour supporter un échantillon dans un :

plan sensiblement vertical ; ou
plan sensiblement horizontal.

**17.** Système ellipsomètre ou polarimètre térahertz selon la revendication 12 ou 13, dans lequel l'étage (STG) destiné à supporter un échantillon est orienté pour supporter un échantillon (S) dans un plan sensiblement horizontal, et dans lequel le faisceau quittant ledit premier élément rotatif (RE1) est dirigé vers celui-ci via des séquences verticales gauches et droites, chacune des premier (FLS/FRS), deuxième (SLS/SRS) et troisième (TLS/TRS) éléments, de sorte que le faisceau électromagnétique de fréquences térahertz quittant ledit polariseur rotatif est réfléchi sur le premier élément du côté gauche (FLS) vers le deuxième élément du côté gauche (SLS), puis vers le troisième élément du côté droit (RS), à partir duquel il est dirigé pour être réfléchi sur un échantillon (S) placé sur l'étage (STG) dans un plan sensiblement horizontal vers le troisième élément du côté gauche (TLS), qui réfléchit ledit faisceau vers le deuxième élément du côté droit (SRS) vers ledit premier élément du côté droit (FRS), à partir duquel ledit faisceau est dirigé dans ledit second élément rotatif (RE2).

**18.** Système ellipsomètre ou polarimètre térahertz selon la revendication 13, dans lequel le polariseur rotatif (RWGP) comprenant une grille de fils est sélectionné à partir du groupe composé :

d'un double système de composants polarisants comprenant des composants d'angle non de Brewster (NBR) et d'angle de Brewster (BR), dans lequel un faisceau de rayonnement électromagnétique qui passe à travers ledit composant d'angle non de Brewster (NBR), qui comprend une grille de fils, puis est réfléchi sur des moyens réfléchissants additionnels (M1) et (M2), puis sur (BR) et continue en tant que faisceau polarisé ; et
d'un double système de polariseurs à grille de fils inclinés comprenant des premier (WG1) et second (WG2) polariseurs à grille de fils qui ont des axes de polarisation rapides orientés dont les axes rapides sont parallèles les uns par rapport aux autres, chacun de ceux-ci ayant des première et seconde surfaces essentiellement parallèles, de sorte que les côtés essentiellement parallèles de (WG1) sont inclinés par rapport aux côtés essentiellement parallèles de (WG2), dans lesquels un faisceau, pénétrant dans l'un desdits premier et second polariseurs à grille de fils, quitte le second dans un état polarisé, dont les réflexions (R1) et (R2) non souhaitées étant détournées.

19. Système ellipsomètre ou polarimètre térahertz selon l'une quelconque des revendications 11 à 13, dans lequel les premier et second éléments rotatifs sont en rotation à des vitesses relatives l'un par rapport à l'autre qui forment un rapport dans la gamme de 1 à 10 ou dans la gamme de 10 à 1.

20. Système ellipsomètre ou polarimètre térahertz selon l'une quelconque des revendications 11 à 19, dans lequel le prisme est placé de sorte que, en utilisation, le faisceau rencontre le prisme avant de rencontrer les premier, deuxième et troisième éléments réfléchissants.

21. Système ellipsomètre ou polarimètre térahertz selon la revendication 11, dans lequel, en utilisation, le faisceau est réfléchi depuis une surface du prisme uniquement.

# FIG. 1a

EP 2 798 322 B1

# FIG. 1b

# FIG. 1a'

FLS            FRS

SLS             SRS

TLS             TRS

S

STG

# FIG. 1c

RRET

RM1            RM2

RP

RM3

# FIG. 1d1

FIG. 1d2

FIG. 1d3

FIG. 1d4

FIG. 1d5

EP 2 798 322 B1

# FIG. 1e

# FIG. 1f

FIG. 2a

FIG. 2b

FIG. 2c

FIG. 2d

FIG. 2e

FIG. 2f

FIG. 2g

## FIG. 3

TO CONTROL OF
ELLIPSOMETER/POLARIMETER
ELEMENT OPERATION

## FIG. 4

**REFERENCES CITED IN THE DESCRIPTION**

**Patent documents cited in the description**

- US 20050175507 A, Tsukruk
- US 5317618 A, Nakahara
- US 20100220313 A1, Herzinger
- US 5914492 A, Wang
- US 20060050269 A, Brownell
- WO 2985790 A, Kompfner
- WO 2880355 A, Epsztein
- US 20040027571 A, Luttman
- WO 6795184 A, Herzinger
- WO 6137618 A, Herzinger
- WO 6084675 A, Herzinger
- WO 6118537 A, Johs
- WO 6141102 A, Johs
- WO 5946098 A, Johs
- WO 6100981 A, Johs
- WO 6084674 A, Johs
- WO 5963325 A, Johs
- WO 7450231 A
- WO 7460230 A, Johs
- WO 5872630 A, Johs
- WO 5706212 A, Thompson
- WO 5757494 A
- WO 5956145 A

- WO 5963327 A, He
- WO 5373359 A, Woollam
- WO 5666201 A, Johs
- WO 5521706 A, Green
- WO 5504582 A, Johs
- WO 4826321 A, Coates
- WO RE34783 A
- WO 4373817 A
- WO 5045704 A, Coates
- WO 5452091 A, Johnson
- WO 4647207 A, Bjork
- WO 4210401 A
- WO 4332476 A
- WO 4355903 A
- WO 4838695 A, Mansuripur
- WO 4750822 A, Rosencwaig
- WO 5596406 A
- WO 5042951 A, Gold
- WO 6268917 A, Johs
- WO 7339718 A, Vodopanov
- WO 6819423 A, Stehle
- WO 5317618 A

**Non-patent literature cited in the description**

- **COLLINS.** Automatic Rotating Element Ellipsometers: Calibration, Operation and Real-Time Applications. *Rev. Sci. Instrum.,* 1990, vol. 61 (8
- **ANDREWS et al.** Gain of a Smith-Purcell Free Electron Laser. *Phy. Rev.,* 2004, vol. 7, 070701
- **HOFMANN et al.** Terahertz Generalized Meuller-matrix Ellipsometry. *Proc. of SPIE,* 2005, vol. 6120, 61200D1-61200D10
- **HOFMANN et al.** Terahertz magneto-optic generalized ellipsometry using synchrotron and blackbody radiation. *American Inst. of Physics,* 2006, vol. 77, 063902-1, 063902-12
- **MENIKH et al.** Label-free Amplified Bioaffinity Detection Using Terahertz Wave Technology. *Biosensors and Bioelectronics,* 2004, vol. 20, 658-662
- **HANGO et al.** Spectroscopy by Pulsed Terahertz Radiation. *Meas. Sci. and Technol.,* 2002, vol. 13, 1727-1738
- **NAGASHIMA et al.** Measurement of Complex Optical Constants of a Highly Doped Si Wafer Using Terahertz Ellipsometry. *Applied Phys. Lett.,* 10 December 2001, vol. 79 (24

- Development of Terahertz Ellipsometry and its Application to Evaluation of Semiconductors. **NAGASHIMA et al.** Tech. Meeting on Light Application and Visual Science. IEEE, 2002
- **DOBROIU et al.** Terahertz Imaging System Based on a Backward-Wave Oscillator. *Applied Optics,* 20 October 2004, vol. 43 (30
- **JOHS.** Regression Calibration Method for Rotating Element Ellipsometers. *Thin Solid Films,* 1993, 234
- **DIETZ et al.** THz Ellipsometry in Theory and Experiment. *33rd International Conference on Infrared and Millimeter Waves and 16th International Conference on Terahertz Electronics, IRMMW-THz,* 2008
- **RUDYCH.** Study Terahertz Ellipsometry Setups for Measuring Metals and Dielectrics Using Free Electron Laser Light Source. *31st International Conference on Infrared and Millimeter Waves and 14th International Conference on Terahertz Electronics, IRMMW-THz,* 2006

- **HOLLDACK et al.** Spectral THz Ellipsometer for the Unambiguous Determination of all Stokes Parameters. *30th International Conference on Infrared and Millimeter Waves and 13th International Conference on Terahertz Electronics, IRMMW-THz,* 2006
- **ESQUINAZI et al.** Terahertz Magneto-Optic Generalized Ellipsometry Using Synchrotron and Blackbody Radiation. *Sci. Instrum.,* 2006, vol. 7 (6
- **ESQUINAZI et al.** Terahertz Generalized Mueller-Matrix Ellipsometry. *Proc. Int. Soc. Opt. Eng.,* 2006, vol. 6120
- **KUWATA-GONOKAMI et al.** THz Time-Domain Magneto-Optic Ellipsometry in Reflection Geometry. *Trends Opt. Photonics Series,* 2004, vol. 97
- **GALLOT et al.** Terahertz Polarimetry. *Conf. Lasers Electro-Optics, CLEO,* 2005, vol. 3
- **HANGYO et al.** Evaluation of Complex Optical Constants of Semiconductor Wafers using Terahertz Ellipsometry. *Trends Opt. Photonics Series,* 2003, vol. 88

- **HURLBUT et al.** Improved Performance of Hybrid Electronic Terahertz Generators. *33rd International Conference on Infrared and Millimeter Waves and Terahertz Waves, IRMMW-THz,* 2008
- **VODOPYANOV et al.** Terahertz Wave Generation in Orientation-Patterned GaAs Using Resonantly Enhanced Schemes. *SPIE-Intl. Soc. for Opt. Eng. USA,* 2007, vol. 6455
- **GORSHUNOV et al.** Terahertz BWO Spectroscopy of Conductors and Superconductors. *Quantum Electronics,* October 2007, vol. 37 (10
- **KOZLOV et al.** Portable THz Spectrometers. *31st International Conference on Infrared and Millimeter Waves and 14th International Conference on Terahertz Electronics, IRMMW-THz,* 2007
- **NISHIZAWA et al.** Terahertz Time-Domain Spectroscopy. *Terahertz Optoelectronics, Topics Appl. Phys.,* 2005, vol. 97, 203-271